# EUROPEAN PATENT SPECIFICATION

(11) **EP 4 451 770 B1**
(45) Date of publication and mention of the grant of the patent: **17.06.2026**
(21) Application number: 22919966.6
(22) Date of filing: 06.12.2022
(51) Int. Cl.: H04B 7/06, H04W 24/02, H04W 24/08, H04L 5/00, H04W 72/04

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 14.01.2022 CN 202210044848; 28.02.2022 CN 202210192662
(43) Date of publication of application: 23.10.2024
(73) Proprietor: Huawei Technologies Co., Ltd., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Körber, Martin Hans
(86) International application number: PCT/CN2022/136964
(87) International publication number: WO 2023/134333

(56) References cited:
- WO-A1-2020/216293
- CN-A- 110 972 515
- CN-A- 111 314 035
- CN-A- 111 800 801
- CN-A- 113 595 703
- US-A1- 2020 053 613
- US-A1- 2020 288 479

## Description

This application claims priorities to Chinese Patent Application No. 202210044848.9, filed with the China National Intellectual Property Administration on January 14, 2022 and entitled "COMMUNICATION METHOD, TERMINAL, AND NETWORK DEVICE", and to Chinese Patent Application No. 202210192662.8, filed with the China National Intellectual Property Administration on February 28, 2022 and entitled "COMMUNICATION METHOD AND APPARATUS".

### TECHNICAL FIELD

This application relates to the field of communication technologies, and in particular, to a communication method and apparatus.

### BACKGROUND

In millimeter wave communication, in an initial phase of setting up a connection between a transmitter device and a receiver device, the transmitter device and the receiver device need to determine a proper beam direction and a corresponding space domain filtering parameter by using a beam training process, and determine a beam pair link (beam pair link, BPL) between the transmitter device and the receiver device.

In an existing new radio (new radio, NR) system, the beam training process is completed by using a channel state information (channel state information, CSI) reporting procedure. For example, a network device (that is, a transmitter device) sends channel state information reference signals (channel state information reference signal, CSI-RS) to a terminal device (that is, a receiver device) by using different beams. There is usually a correspondence between different reference signals and beams. The terminal device may receive the CSI-RS signal by using different beams, to obtain a receive beam that matches different transmit beams of the network device, that is, determine one or more BPLs, and then report a CSI-RS measurement result to the network device. The measurement result includes an identifier of the reference signal and reference signal received power or a signal-to-noise ratio corresponding to the reference signal. The network device may determine one or more good transmit beams based on the measurement result of the CSI-RS, to complete the beam training process.

After the beam training process is completed, the network device and the terminal device may receive and send, by using an optimal BPL, downlink control information (downlink control information, DCI) carried on a physical downlink control channel (physical downlink control channel, PDCCH). Because the terminal device does not know whether the network device delivers the DCI and a location in which to deliver the DCI, the network device configures a control resource set (control resource set, CORESET) and a search space (search space, SS) for the terminal device in advance, and determines some candidate time-frequency resource locations, so that the terminal device performs blind detection on the physical downlink control channel (physical downlink control channel, PDCCH) (or the DCI) at these locations.

Configuration information of the CORESET includes transmission configuration indicator (transmission configuration indicator, TCI) state information. The TCI state information may indicate a source reference signal (reference signal, RS) having a type D quasi-colocation (quasi-colocation, QCL) relationship with a demodulation reference signal (demodulation reference signal, DMRS) of the PDCCH. It may be understood that if two reference signals have the type D QCL relationship, a receive beam corresponding to one reference signal may be determined based on a receive beam corresponding to another reference signal. Therefore, the terminal device may determine, based on a BPL corresponding to a type D QCL source reference signal indicated by the TCI state information, a receive beam used when blind detection is performed on the PDCCH. Specifically, if the TCI state information indicates that the DMRS of the PDCCH and a CSI-RS have the type D QCL relationship, and the terminal device has previously determined, by using the beam training process, the optimal receive beam corresponding to the CSI-RS, the terminal device may perform PDCCH blind detection on a same time-frequency location by using a same receive beam.

However, when a block exists between the transmitter device and the receiver device, communication quality of the previously determined optimal BPL may deteriorate. Therefore, the network device needs to reconfigure (that is, update) the TCI state information in the CORESET, in other words, update a BPL for receiving and sending a PDCCH in the CORESET, that is, perform beam switching. An existing procedure for reconfiguring the TCI state information generally includes: The terminal device reports CSI; and the network device returns an acknowledgment (acknowledgement, ACK) message after receiving the CSI. If the CSI indicates that quality of an original BPL deteriorates or the optimal BPL changes, the network device sends signaling for activating new TCI state information to update a BPL used for PDCCH receiving and sending. The terminal device demodulates and decodes the signaling and returns the ACK message. In this process, complex signaling interaction exists, resulting in an excessively long delay in updating the TCI state information. In other words, this process causes an excessively long delay in updating a source reference signal that has a QCL relationship with a demodulation reference signal associated with the PDCCH (or the DCI). However, in a process in which a beam needs to be switched, communication quality of a beam link deteriorates at a high speed. If a configuration of new TCI state information or a new BPL is not completed before the beam link is completely unavailable, a communication link may be interrupted. Relevant prior art is disclosed on US2020/288479A1 and US2020/053613A1.

### SUMMARY

This application provides a communication method and apparatus, to reduce a delay of updating TCI state information in a CORESET, that is, reduce a delay of updating a source reference signal that has a QCL relationship with a demodulation reference signal of a PDCCH, or reduce a delay of updating a receive beam used by a terminal when a PDCCH is monitored in the CORESET/SS, and reduce a probability of communication link interruption.

To achieve the foregoing objective, this application uses the following technical solutions.

According to a first aspect, this application provides a communication method. The method may be performed by a terminal, or may be performed by a component of the terminal, for example, a processor, a chip, or a chip system of the terminal. The method includes: reporting channel state information to a network device, where the channel state information includes an identifier of at least one reference signal and reference signal received power RSRP corresponding to each of the at least one reference signal and/or a signal to interference plus noise ratio SINR corresponding to each reference signal; and when the channel state information meets a preset condition, starting to monitor a physical downlink control channel PDCCH in a first search space SS, where a demodulation reference signal of the PDCCH in the first SS and a first reference signal meet a type D quasi-colocation QCL relationship, and the first reference signal is a reference signal with highest RSRP or a reference signal with a highest SINR in the channel state information.

Based on the foregoing technical solution, when the channel state information meets the preset condition, it may be inferred that a change of an optimal BPL between the network device and the terminal causes switching of the optimal BPL/beam. The network device may send the PDCCH to the terminal in the first SS, and the terminal starts to monitor the PDCCH in the first SS, that is, the first SS starts to take effect or is activated. In other words, the terminal and the network device can directly send and receive the PDCCH in the first SS by using a new beam. The demodulation reference signal of the PDCCH in the first SS and the first reference signal meet the type D QCL relationship. It may be understood that a type D source reference signal indicated in the TCI state information of a CORESET associated with the first SS is the first reference signal, or is a reference signal that has the type D QCL relationship with the first reference signal. The first reference signal is a reference signal with highest RSRP or a reference signal with a highest SINR in the channel state information. In other words, a BPL corresponding to the first reference signal is an optimal BPL. Therefore, the network device may send the PDCCH by using a transmit beam corresponding to the optimal BPL, and the terminal may monitor the PDCCH by using a receive beam corresponding to the optimal BPL.

In this way, when the channel state information reported by the terminal indicates that the optimal BPL between the terminal and the network device changes, a temporary first SS may be directly activated between the terminal and the network device. The terminal and the network device may send and receive the PDCCH on the temporary first SS based on the optimal BPL indicated in the channel state information, so that more fast and efficient beam switching can be implemented. To be specific, after the first SS is activated, the TCI state information of the CORESET associated with the first SS is automatically configured, that is, the type D QCL source reference signal is the first reference signal. Therefore, the terminal and the network device do not need to update the TCI state information of the CORESET by using complex signaling interaction, thereby reducing a long signaling interaction time, and reducing a delay of updating the TCI state information, that is, reducing a delay of updating the receive beam used by the terminal to monitor the PDCCH in the CORESET, or a delay of updating a source reference signal that has the QCL relationship with a demodulation reference signal of the PDCCH (or DCI), and reducing a link interruption probability.

In a possible design, before reporting the channel state information to the network device, the method further includes: receiving first configuration information from the network device, where the first configuration information includes configuration information of a first control resource set CORESET and configuration information of the first SS, the configuration information of the first CORESET and the configuration information of the first SS include time-frequency location information of a candidate PDCCH, and the first SS is associated with the first CORESET. It may also be understood as that the configuration information of the first CORESET may be used in the first SS. The first CORESET is a first-type CORESET, and an SS associated with the first-type CORESET is an SS in which the terminal does not monitor the PDCCH by default. It may also be understood that after the terminal receives the first configuration information, the terminal may not monitor the PDCCH in the first SS. In addition, that the demodulation reference signal of the PDCCH in the first SS and the first reference signal meet the type D QCL relationship may also be understood as that the demodulation reference signal of the PDCCH in the first CORESET and the first reference signal meet the type D QCL relationship.

In a possible design, before reporting the channel state information to the network device, the method further includes: receiving second configuration information from the network device, where the second configuration information includes configuration information of at least one second-type CORESET and configuration information of at least one second SS, the at least one second SS is associated with the at least one second-type CORESET, and the terminal needs to monitor the PDCCH in an SS associated with the second-type CORESET; and configuration information of each second-type CORESET includes transmission configuration indicator TCI state information, the TCI state information indicates a source reference signal, and the source reference signal and a demodulation reference signal of the PDCCH in the second-type CORESET meet the type D QCL relationship. The PDCCH in the second-type CORESET may be understood as a PDCCH in at least one second SS associated with the second-type CORESET.

In a possible design, the preset condition includes: the first reference signal and a second reference signal are different; or the first reference signal and a second reference signal do not meet the type D QCL relationship, where the second reference signal is a source reference signal indicated by TCI state information included in configuration information of one of the at least one second-type CORESET. Based on this design, when the preset condition is met, it may be determined, based on the channel state information, that quality of an existing BPL used to receive and send the PDCCH is lower than quality of a BPL corresponding to the first reference signal. Therefore, the PDCCH needs to be received and sent over a new BPL.

In a possible design, the channel state information includes an identifier of a third reference signal and RSRP and/or an SINR corresponding to the third reference signal; and the preset condition includes: An RSRP value or an SINR value of the third reference signal is less than a preset threshold, and the third reference signal is the same as the second reference signal; or an RSRP value or an SINR value of the third reference signal is less than a preset threshold, and the third reference signal and the second reference signal meet the type D QCL relationship, where the second reference signal is the source reference signal indicated by the TCI state information included in the configuration information of the one of the at least one second-type CORESET. Based on this design, when the preset condition is met, it may be determined, based on the channel state information, that quality of an existing BPL used to receive and send the PDCCH is lower than the preset threshold. Therefore, the PDCCH needs to be received and sent over the new BPL.

In a possible design, the first SS is a first user-specific search space USS, the at least one second SS includes at least one second USS, and the method further includes: when the PDCCH needs to be monitored in the first USS and some or all of the at least one second USS in a target time unit, monitoring the PDCCH preferentially in the first USS based on a monitoring capability of the terminal. It may be understood that the BPL corresponding to the first USS is the optimal BPL indicated in the channel state information. Therefore, based on this design, the terminal monitors the PDCCH preferentially in the first USS, so that efficiency of monitoring the PDCCH can be higher.

In a possible design, the first SS is a first USS, the at least one second SS includes at least one second USS, and the method further includes: when the PDCCH needs to be monitored in the first USS and some or all of the at least one second USS in a target time unit, monitoring the PDCCH in a corresponding USS based on a monitoring capability of the terminal and a priority of the USS, where a priority of the first USS is lower than a priority of a third USS and is higher than a priority of a fourth USS, the third USS is a second USS with a highest priority in the at least one second USS, and the fourth USS is a second USS with a second highest priority in the at least one second USS; or a priority of the first USS is lower than a priority of a third USS and is higher than a priority of a fourth USS, the third USS is a second USS with a highest priority in the target time unit, and the fourth USS is a second USS with a second highest priority in the target time unit. Based on this design, the terminal monitors the PDCCH preferentially in a second USS with a highest priority. In other words, the terminal monitors the PDCCH preferentially on the existing BPL. In this way, when the network device does not receive the channel state information, the terminal activates the first SS, but the network device does not activate the first SS, and the network device and the terminal cannot receive and send the PDCCH over the new BPL, to ensure smoothness of the existing BPL. It may be understood that communication quality of the existing BPL is not completely unavailable, some basic communication operations may further performed on the existing BPL. Therefore, this solution can ensure that a communication link is not interrupted.

In a possible design, after monitoring the PDCCH in the first SS, the method further includes: stopping monitoring the PDCCH in the first SS after a first moment, where the first moment is a moment before which target duration elapses after a second moment, and the second moment is: a moment at which the channel state information is sent to the network device; a moment at which an acknowledgment message is received from the network device, where the acknowledgment message indicates that the network device successfully receives the channel state information; a moment at which the first SS takes effect for the first time; or a moment at which the PDCCH is monitored in the first SS for the first time.

In a possible design, after monitoring the PDCCH in the first SS, the method further includes: after receiving TCI state information that is included in configuration information of a target CORESET reconfigured by the network device, stopping monitoring the PDCCH in the first SS, where the target CORESET belongs to the at least one second-type CORESET; or after receiving target indication information from the network device, stopping monitoring the PDCCH in the first SS, where the target indication information indicates the terminal to stop monitoring the PDCCH in the first SS.

According to a second aspect, this application provides a communication method. The method may be performed by a network device, or may be performed by a component of the network device, for example, a processor, a chip, or a chip system of the network device. The method includes: receiving channel state information from a terminal, where the channel state information includes an identifier of at least one reference signal and RSRP corresponding to each of the at least one reference signal and/or an SINR corresponding to each reference signal; and when the channel state information meets a preset condition, determining that the terminal starts to monitor the PDCCH in a first SS, where a demodulation reference signal of the PDCCH in the first SS and a first reference signal meet a type D QCL relationship, and the first reference signal is a reference signal with highest RSRP or a reference signal with a highest SINR in the first channel state information.

In a possible design, before receiving the channel state information from the terminal, the method further includes: sending first configuration information to the terminal, where the first configuration information includes configuration information of a first CORESET and configuration information of the first SS, the configuration information of the first CORESET and the configuration information of the first SS include time-frequency location information of a candidate PDCCH, and the first SS is associated with the first CORESET. It may also be understood as that the configuration information of the first CORESET may be used in the first SS. The first CORESET is a first-type CORESET, and an SS associated with the first-type CORESET is an SS in which the terminal does not monitor the PDCCH by default. It may also be understood that after the terminal receives the first configuration information, the terminal may not monitor the PDCCH in the first SS. In addition, that the demodulation reference signal of the PDCCH in the first SS and the first reference signal meet the type D QCL relationship may also be understood as that the demodulation reference signal of the PDCCH in the first CORESET and the first reference signal meet the type D QCL relationship.

In a possible design, before receiving the channel state information from the terminal, the method further includes: sending second configuration information to the terminal, where the second configuration information includes configuration information of at least one second-type CORESET and configuration information of at least one second SS, the at least one second SS is associated with the at least one second-type CORESET, and the terminal needs to monitor the PDCCH in an SS associated with the second-type CORESET; and configuration information of each second-type CORESET includes transmission configuration indicator TCI state information, the TCI state information indicates a source reference signal, and the source reference signal and a demodulation reference signal of the PDCCH in the second-type CORESET meet the type D QCL relationship. The PDCCH in the second-type CORESET may be understood as a PDCCH in at least one second SS associated with the second-type CORESET.

In a possible design, the preset condition includes: the first reference signal and a second reference signal are different; or the first reference signal and a second reference signal do not meet the type D QCL relationship, where the second reference signal is a source reference signal indicated by TCI state information included in configuration information of one of the at least one second-type CORESET.

In a possible design, the channel state information includes an identifier of a third reference signal and RSRP and/or an SINR corresponding to the third reference signal; and the preset condition includes: An RSRP value or an SINR value of the third reference signal is less than a preset threshold, and the third reference signal is the same as the second reference signal; or an RSRP value or an SINR value of the third reference signal is less than a preset threshold, and the third reference signal and the second reference signal meet the type D QCL relationship, where the second reference signal is the source reference signal indicated by the TCI state information included in the configuration information of the one of the at least one second-type CORESET.

In a possible design, after determining that the terminal starts to monitor the PDCCH in the first SS, the method further includes: determining that the terminal stops monitoring the PDCCH in the first SS after a first moment, where the first moment is a moment before which target duration elapses after a second moment, and the second moment is: a moment at which the channel state information is received from the terminal; a moment at which an acknowledgment message is sent to the terminal, where the acknowledgment message indicates that the network device successfully receives the channel state information; a moment at which the first SS takes effect for the first time; or a moment at which the PDCCH is sent to the terminal for the first time in the first SS.

In a possible design, after determining that the terminal starts to monitor the PDCCH in the first SS, the method further includes: after sending TCI state information that is included in configuration information of a reconfigured target CORESET to the terminal, determining that the terminal stops monitoring the PDCCH in the first SS, where the target CORESET belongs to the at least one second-type CORESET; or after sending target indication information to the terminal, determining that the terminal stops monitoring the PDCCH in the first SS, where the target indication information indicates the terminal to stop monitoring the PDCCH in the first SS.

According to a third aspect, this application provides a communication apparatus. The communication apparatus may be the terminal in the first aspect, or an apparatus including the terminal, or an apparatus included in the terminal, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions. In a possible design, the communication apparatus includes a communication module (or referred to as a communication unit, a transceiver unit, or a transceiver module) and a processing module (or referred to as a processing unit); the communication module is configured to report channel state information to a network device, where the channel state information includes an identifier of at least one reference signal and RSRP corresponding to each of the at least one reference signal and/or an SINR corresponding to each reference signal; and the processing module is configured to: when the channel state information meets a preset condition, start to monitor a PDCCH in a first SS, where a demodulation reference signal of the PDCCH in the first SS and a first reference signal meet a type D QCL relationship, and the first reference signal is a reference signal with highest RSRP or a reference signal with a highest SINR in the channel state information.

In a possible design, the communication module is further configured to receive first configuration information from the network device, where the first configuration information includes configuration information of a first CORESET and configuration information of the first SS, the configuration information of the first CORESET and the configuration information of the first SS include time-frequency location information of a candidate PDCCH, and the first SS is associated with the first CORESET. It may also be understood as that the configuration information of the first CORESET may be used in the first SS. The first CORESET is a first-type CORESET, and an SS associated with the first-type CORESET is an SS in which the communication apparatus does not monitor the PDCCH by default. It may also be understood that after the terminal receives the first configuration information, the terminal may not monitor the PDCCH in the first SS. In addition, that the demodulation reference signal of the PDCCH in the first SS and the first reference signal meet the type D QCL relationship may also be understood as that the demodulation reference signal of the PDCCH in the first CORESET and the first reference signal meet the type D QCL relationship.

In a possible design, the communication module is further configured to receive second configuration information from the network device, where the second configuration information includes configuration information of at least one second-type CORESET and configuration information of at least one second SS, the at least one second SS is associated with the at least one second-type CORESET, and the communication apparatus needs to monitor the PDCCH in an SS associated with the second-type CORESET; and configuration information of each second-type CORESET includes TCI state information, the TCI state information indicates a source reference signal, and the source reference signal and a demodulation reference signal of the PDCCH in the second-type CORESET meet the type D QCL relationship. The PDCCH in the second-type CORESET may be understood as a PDCCH in at least one second SS associated with the second-type CORESET.

In a possible design, the preset condition includes: the first reference signal and a second reference signal are different; or the first reference signal and a second reference signal do not meet the type D QCL relationship, where the second reference signal is a source reference signal indicated by TCI state information included in configuration information of one of the at least one second-type CORESET.

In a possible design, the channel state information includes an identifier of a third reference signal and RSRP and/or an SINR corresponding to the third reference signal; and the preset condition includes: An RSRP value or an SINR value of the third reference signal is less than a preset threshold, and the third reference signal is the same as the second reference signal; or an RSRP value or an SINR value of the third reference signal is less than a preset threshold, and the third reference signal and the second reference signal meet the type D QCL relationship, where the second reference signal is the source reference signal indicated by the TCI state information included in the configuration information of the one of the at least one second-type CORESET.

In a possible design, the first SS is a first user-specific search space USS, and the at least one second SS includes at least one second USS; and the processing module is further configured to: when the PDCCH needs to be monitored in the first USS and some or all of the at least one second USS in a target time unit, monitor the PDCCH preferentially in the first USS based on a monitoring capability of the communication apparatus.

In a possible design, the first SS is a first USS, and the at least one second SS includes at least one second USS; and the processing module is further configured to: when the PDCCH needs to be monitored in the first USS and some or all of the at least one second USS in a target time unit, monitor the PDCCH in a corresponding USS based on a monitoring capability of the communication apparatus and a priority of the USS, where a priority of the first USS is lower than a priority of a third USS and is higher than a priority of a fourth USS, the third USS is a second USS with a highest priority in the at least one second USS, and the fourth USS is a second USS with a second highest priority in the at least one second USS; or a priority of the first USS is lower than a priority of a third USS and is higher than a priority of a fourth USS, the third USS is a second USS with a highest priority in the target time unit, and the fourth USS is a second USS with a second highest priority in the target time unit.

In a possible design, the processing module is further configured to stop monitoring the PDCCH in the first SS after a first moment, where the first moment is a moment before which target duration elapses after a second moment, and the second moment is: a moment at which the channel state information is sent to the network device; a moment at which an acknowledgment message is received from the network device, where the acknowledgment message indicates that the network device successfully receives the channel state information; a moment at which the first SS takes effect for the first time; or a moment at which the PDCCH is monitored in the first SS for the first time.

In a possible design, the processing module is further configured to: after receiving TCI state information that is included in configuration information of a target CORESET reconfigured by the network device, stop monitoring the PDCCH in the first SS, where the target CORESET belongs to the at least one second-type CORESET; or the processing module is further configured to: after receiving target indication information from the network device, stop monitoring the PDCCH in the first SS, where the target indication information indicates the communication apparatus to stop monitoring the PDCCH in the first SS.

According to a fourth aspect, this application provides a communication apparatus. The communication apparatus may be the network device in the second aspect, or an apparatus including the network device, or an apparatus included in the network device, such as a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions. In a possible design, the communication apparatus includes a communication module (or referred to as a communication unit, a transceiver module, or a transceiver unit) and a processing module (or referred to as a processing unit). The communication module is configured to receive channel state information from a terminal, where the channel state information includes an identifier of at least one reference signal and RSRP corresponding to each of the at least one reference signal and/or an SINR corresponding to each reference signal; and the processing module is configured to: when the channel state information meets a preset condition, determine that the terminal starts to monitor a PDCCH in a first SS, where a demodulation reference signal of the PDCCH in the first SS and a first reference signal meet a type D QCL relationship, and the first reference signal is a reference signal with highest RSRP or a reference signal with a highest SINR in the first channel state information.

In a possible design, the communication module is further configured to send first configuration information to the terminal, where the first configuration information includes configuration information of a first CORESET and configuration information of the first SS, the configuration information of the first CORESET and the configuration information of the first SS include time-frequency location information of a candidate PDCCH, and the first SS is associated with the first CORESET. It may also be understood as that the configuration information of the first CORESET may be used in the first SS. The first CORESET is a first-type CORESET, and an SS associated with the first-type CORESET is an SS in which the terminal does not monitor the PDCCH by default. It may also be understood that after the terminal receives the first configuration information, the terminal may not monitor the PDCCH in the first SS. In addition, that the demodulation reference signal of the PDCCH in the first SS and the first reference signal meet the type D QCL relationship may also be understood as that the demodulation reference signal of the PDCCH in the first CORESET and the first reference signal meet the type D QCL relationship.

In a possible design, the communication module is further configured to send second configuration information to the terminal, where the second configuration information includes configuration information of at least one second-type CORESET and configuration information of at least one second SS, the at least one second SS is associated with the at least one second-type CORESET, and the terminal needs to monitor the PDCCH in an SS associated with the second-type CORESET; and configuration information of each second-type CORESET includes transmission configuration indicator TCI state information, the TCI state information indicates a source reference signal, and the source reference signal and a demodulation reference signal of the PDCCH in the second-type CORESET meet the type D QCL relationship. The PDCCH in the second-type CORESET may be understood as a PDCCH in at least one second SS associated with the second-type CORESET.

In a possible design, the preset condition includes: the first reference signal and a second reference signal are different; or the first reference signal and a second reference signal do not meet the type D QCL relationship, where the second reference signal is a source reference signal indicated by TCI state information included in configuration information of one of the at least one second-type CORESET.

In a possible design, the channel state information includes an identifier of a third reference signal and RSRP and/or an SINR corresponding to the third reference signal; and the preset condition includes: An RSRP value or an SINR value of the third reference signal is less than a preset threshold, and the third reference signal is the same as the second reference signal; or an RSRP value or an SINR value of the third reference signal is less than a preset threshold, and the third reference signal and the second reference signal meet the type D QCL relationship, where the second reference signal is the source reference signal indicated by the TCI state information included in the configuration information of the one of the at least one second-type CORESET.

In a possible design, the processing module is further configured to determine that the terminal stops monitoring the PDCCH in the first SS after a first moment, where the first moment is a moment before which target duration elapses after a second moment, and the second moment is: a moment at which the channel state information is received from the terminal; a moment at which an acknowledgment message is sent to the terminal, where the acknowledgment message indicates that the communication apparatus successfully receives the channel state information; a moment at which the first SS takes effect for the first time; or a moment at which the PDCCH is sent to the terminal for the first time in the first SS.

In a possible design, the processing module is further configured to: after sending TCI state information that is included in configuration information of a reconfigured target CORESET to the terminal, determine that the terminal stops monitoring the PDCCH in the first SS, where the target CORESET belongs to the at least one second-type CORESET; or the processing module is further configured to: after sending target indication information to the terminal, determine that the terminal stops monitoring the PDCCH in the first SS, where the target indication information indicates the terminal to stop monitoring the PDCCH in the first SS.

According to a fifth aspect, this application provides a communication apparatus, including a processor and a communication interface. The communication interface is configured to communicate with another apparatus. The processor is configured to execute a computer program or instructions, so that the communication apparatus performs the method according to any one of the first aspect and the designs of the first aspect, or the communication apparatus performs the method according to any one of the second aspect and the designs of the second aspect.

According to a sixth aspect, this application provides a communication apparatus, including a processor and a memory. The memory is configured to store computer instructions, and when the processor executes the instructions, the communication apparatus is enabled to perform the method according to the first aspect or the second aspect. The communication apparatus may be the terminal in the first aspect, or an apparatus including the terminal, or an apparatus included in the terminal, for example, a chip; or the communication apparatus may be the network device in the second aspect, or an apparatus including the network device, or an apparatus included in the network device, for example, a chip.

According to a seventh aspect, this application provides a communication apparatus, including at least one processor. The processor is configured to execute a computer program or instructions stored in a memory, so that the communication apparatus performs the method according to the first aspect or the second aspect. The memory may be coupled to the processor, or may be independent of the processor. The communication apparatus may be the terminal in the first aspect, or an apparatus including the terminal, or an apparatus included in the terminal, for example, a chip; or the communication apparatus may be the network device in the second aspect, or an apparatus including the network device, or an apparatus included in the network device, for example, a chip.

According to an eighth aspect, this application provides a computer-readable storage medium, including a computer program or instructions. When the computer program or the instructions is/are run on a communication apparatus, the communication apparatus performs the method according to any one of the first aspect and the designs of the first aspect, or the communication apparatus performs the method according to any one of the second aspect and the designs of the second aspect.

According to a ninth aspect, this application provides a computer program product, where the computer program product includes a computer program or instructions. When the computer program or the instructions is/are run on a computer, the computer is enabled to perform the method according to any one of the first aspect and the designs of the first aspect, or the computer is enabled to perform the method according to any one of the second aspect and the designs of the second aspect.

According to a tenth aspect, this application provides a chip, including a processing circuit and a transceiver pin. The processing circuit and the transceiver pin are configured to implement the method provided in any design of the first aspect or the second aspect. The processing circuit is configured to perform a processing action in a corresponding method, and the transceiver pin is configured to perform a receiving/transmitting action in the corresponding method.

According to an eleventh aspect, this application provides a communication system, including the communication apparatus provided in the third aspect or any design of the third aspect and the communication apparatus provided in the fourth aspect or any design of the fourth aspect.

It should be noted that, for technical effect brought by any design in the second aspect to the eleventh aspect, refer to technical effect brought by corresponding designs in the first aspect. Details are not described herein again.

### BRIEF DESCRIPTION OF DRAWINGS

FIG. 1 is a diagram in which a terminal and a network device send and receive a CSI-RS by using different beams according to an embodiment of this application;
FIG. 2 is a diagram of a configured CORESET and an SS according to an embodiment of this application;
FIG. 3 is a conventional schematic flowchart of updating TCI state information in a CORESET;
FIG. 4 is a diagram of an architecture of a communication system according to an embodiment of this application;
FIG. 5 is a diagram of an architecture of another communication system according to an embodiment of this application;
FIG. 6 is a schematic flowchart of a communication method according to an embodiment of this application;
FIG. 7 is a schematic flowchart of activating a first SS according to an embodiment of this application;
FIG. 8 is a schematic flowchart of another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following describes the technical solutions in embodiments of this application in detail with reference to the accompanying drawings.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In the descriptions of this application, the "indication" may include a direct indication and an indirect indication, or may include an explicit indication and an implicit indication. Information indicated by a piece of information is referred to as to-be-indicated information. In a specific implementation process, there are many manners of indicating the to-be-indicated information. For example, the to-be-indicated information may be directly indicated, where the to-be-indicated information, an index of the to-be-indicated information, or the like is indicated. For another example, the to-be-indicated information may be indirectly indicated by indicating other information. There is an association relationship between the other information and the to-be-indicated information. For another example, only a part of the to-be-indicated information may be indicated, and the other part of the to-be-indicated information is already known or pre-agreed on. In addition, specific information may also be indicated by using a pre-agreed (for example, stipulated in a protocol) arrangement sequence of various pieces of information, to reduce indication overheads to some extent.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding, the following first describes technical terms and related concepts that may be used in embodiments of this application.

### 1. Millimeter wave communication and beam

A frequency band used in millimeter wave communication (referred to as a millimeter wave frequency band for short) may be an electromagnetic wave frequency band with a frequency range from 30 gigahertz (GHz) to 300 GHz. In some scenarios, frequency bands similar to 30 GHz, such as 26 GHz and 28 GHz, are also classified as the millimeter wave frequency bands. Compared with a conventional sub-6 GHz frequency band, the millimeter wave frequency band has a wider spectrum resource, and can support transmission at a high data rate. In addition, a wavelength of the millimeter wave frequency band is small. Therefore, an antenna size is smaller, and integration of a plurality of antennas is more convenient. Therefore, millimeter wave communication is a key technology in a fifth generation mobile communication (the fifth generation, 5G) NR system and a future communication system. However, compared with the conventional sub-6 GHz band, channel attenuation of the millimeter wave band is large. Therefore, a device that uses the millimeter wave band for communication needs to use a beamforming technology to concentrate signal sending and receiving energy in a specific direction, that is, a specific beam, to improve an equivalent channel gain between a transmitter device and a receiver device, and ensure coverage performance and a data transmission rate of millimeter wave communication.

The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. The beam includes a transmit beam and a receive beam. The transmit beam may be distribution of signal strength formed in different directions in space after a signal is transmitted through an antenna, and the receive beam may be distribution of received signal strength that is enhanced or weakened by an antenna array in different directions in space.

A common implementation of beamforming is to set different amplitude gains and/or phase deviations on a plurality of transmit/receive antenna units, which may be equivalent to forming a space filter, to implement sending and receiving of a signal in a specific beam direction. Therefore, different beams may be referred to as (or "correspond to") different space domain parameters, space domain filters, space domain filter parameters, or the like. Different transmit beams may be referred to as (or "correspond to") different space domain transmit parameters, space domain transmit filters, space domain transmit filter parameters, or the like. Different receive beams may be referred to as different space domain receive parameters, space domain receive filters, space domain receive filter parameters, or the like. In embodiments of this application, "space domain" may also be referred to as "space", and "space" may also be referred to as "space domain". The space domain and the space have a same meaning.

### 2. Beam training and beam tracking

Because information such as a location and a channel between the transmitter device and the receiver device is usually unknown in an initial phase of establishing a connection between the transmitter device and the receiver device, the transmitter device and the receiver device need to determine a proper beam and a corresponding space domain filtering parameter by using a beam training process.

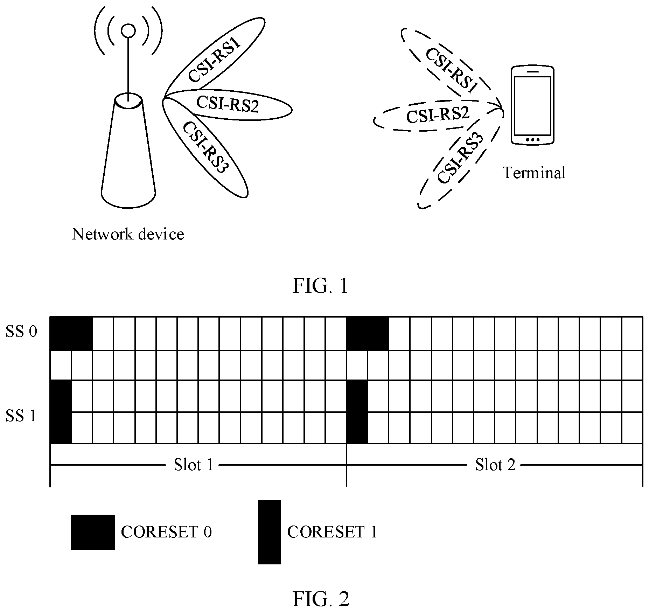

For example, the transmitter device is a network device, and the receiver device is a terminal. In an existing NR system, a beam training process between the network device and the terminal is completed by using a CSI reporting procedure. The CSI reporting procedure specifically includes: The network device configures a plurality of CSI-RSs for the terminal by using the CSI-RS configuration information, where the CSI-RS configuration information includes information such as a time-frequency location, an index, a quantity of ports, and a port pattern of each CSI-RS. As shown in FIG. 1, the network device sends the plurality of CSI-RSs to the terminal. When sending each CSI-RS, the network device may use different space domain transmit parameters, that is, may use different transmit beams.

Then, the terminal receives each CSI-RS sent by the network device, measures reference signal received power (reference signal received power, RSRP) and/or a signal to interference plus noise ratio (signal to interference and noise ratio, SINR) (which may also be referred to as a signal to noise ratio) of each CSI-RS, and then reports CSI to the network device. The CSI includes an index of the CSI-RS and an RSRP value and/or an SINR value corresponding to the CSI-RS. The terminal may also receive the CSI-RS by using different beams. For each transmit beam of the network device, the terminal may use different receive beams, so that the terminal can determine an optimal receive beam for each transmit beam. After the network device receives the CSI reported by the terminal, because the network device already knows the beam used for sending each CSI-RS, the network device may determine, based on the CSI-RS reported by the terminal, which beams are used to send a signal, to enable the terminal to receive a signal with relatively high energy. For these transmit beams, the terminal may also determine corresponding receive beams. Therefore, a BPL between the terminal and the network device may be determined, to complete the beam training process.

It may be understood that the BPL is a transmission link constituted by a transmit beam and a corresponding receive beam. There may be one or more optimal or relatively good BPLs in the BPLs between the terminal and the network device, that is, there is one or more BPLs with good communication quality.

After the terminal establishes a connection to the network device, because the terminal may move, a case like a blockage or a change of a surrounding scatterer environment may occur between the terminal and the network device, and the optimal BPL between the terminal and the network device may change. To ensure that the receive beam of the terminal is always aligned with the transmit beam of the network device, the network device sends, to the terminal, a CSI-RS used for beam tracking. The network device may send the CSI-RS by using a transmit beam corresponding to an optimal BPL obtained through beam training. Correspondingly, the terminal may receive the CSI-RS by using a receive beam corresponding to the optimal BPL, to continuously measure quality of the optimal BPL. In addition, the network device may send the CSI-RS by using another beam. Correspondingly, for each transmit beam of the network device, the terminal may receive the CSI-RS by using different receive beams, to determine a corresponding optimal receive beam. In this way, the optimal BPL between the network device and the terminal is re-determined, to implement a beam tracking process.

Optionally, in embodiments of this application, the CSI-RS may be a synchronization signal (synchronization signal, SS) physical broadcast channel (physical broadcast channel, PBCH) block (SS/PBCH block, SSB), a non-zero power (non-zero-power, NZP)-CSI-RS, or the like. A type of the CSI-RS is not specifically limited in this application.

### 3, CORESET and SS

In a 5G NR system, after beam training is completed, the terminal and the network device may receive and send, by using a previously trained beam (for example, the optimal BPL), DCI carried by a PDCCH. However, because the terminal cannot determine whether the network device delivers the DCI and a specific location for delivering the DCI, the network device configures the CORESET and the SS for the terminal in advance. The CORESET and the SS may be used to determine some time-frequency resource locations, so that the terminal performs blind detection (blind detection, BD) of the PDCCH (or the DCI) at these locations, to obtain the DCI, and determines, based on the DCI, whether the network device schedules the terminal to perform data transmission, channel state information reporting, and the like. In embodiments of this application, blind detection may also be referred to as or understood as detection and monitoring (monitoring).

The CORESET may be used to determine a frequency domain location occupied by the PDCCH carrying the DCI in frequency domain, a quantity of symbols occupied in time domain, and the like. The configuration information of the CORESET includes an identifier of the CORESET, a frequency domain location, a quantity of symbols occupied in time domain, a mapping relationship between a control channel element (control channel element, CCE) and a specific resource element group (resource element group, REG), TCI state information, and the like. In embodiments of this application, the TCI state information may also be referred to as a TCI state for short. For example, one CCE may correspond to six REGs, and one REG represents a resource corresponding to one symbol in time domain and one resource block (resource block, RE) in frequency domain.

The SS may be used to determine information such as a number of a start symbol occupied by the PDCCH in time domain and a PDCCH monitoring period. The configuration information in the SS includes information such as a type of the SS, a sequence number (or referred to as an identifier) of the SS, a period of the SS, an offset in the period, a location of a start symbol of the SS in a slot, a quantity of PDCCH candidate (candidate) sets at each aggregation level, and a type of DCI that needs to be monitored. The PDCCH is formed by aggregating several CCEs, and a quantity of CCEs aggregated into the PDCCH is referred to as the aggregation level.

One SS is associated with (or corresponds to) one CORESET. One CORESET may be associated with one or more SSs, or it may be understood that one CORESET or configuration information of the CORESET may be applied to the SS. For example, as shown in FIG. 2, the network device configures two CORESETs for the terminal: a CORESET 0 and a CORESET 1. The CORESET 0 occupies two symbols in time domain, and occupies 12 physical resource blocks (physical resource block, PRB) in frequency domain. The CORESET 1 occupies one symbol in time domain, and occupies 24 PRBs in frequency domain. The network device further configures two SSs for the terminal. An SS 0 is associated with the CORESET 0, a monitoring period of the SS 0 is one slot (slot), and a start symbol is located on a symbol 0 in a corresponding slot. An SS 1 is associated with the CORESET 1, a monitoring period of the SS 1 is two slots (slot), and a start symbol is located on a symbol 0 in a corresponding slot.

It may be understood that the time-frequency resource determined based on the CORESET and the SS includes many CCEs, but the terminal does not know which CCEs are aggregated to form the PDCCH. Therefore, all resources that may be PDCCHs are referred to as PDCCH candidate sets. In other words, the PDCCH sent by the network device may appear in each PDCCH candidate set. In this embodiment of this application, the PDCCH candidate set may also be referred to as a candidate PDCCH.

A type of the SS includes a common search space (common search space, CSS) and a user equipment UE (user, equipment, UE) specific search space (UE specific search space, USS). The CSS is generally used to broadcast some common information of a cell. The USS can be used only by a specific terminal, for example, the USS may be used after the specific terminal accesses the network device. A priority of the CSS is higher than that of the USS, and a priority of a USS with a smaller sequence number is higher than a priority of a USS with a larger sequence number. It should be noted that, based on consideration of processing complexity, power consumption, and the like of the terminal, a quantity of times of monitoring by the terminal in each time unit, a quantity of CCEs that can be used to perform channel estimation, a quantity of candidate PDCCHs that can be monitored, and the like are limited to some extent. Therefore, when a quantity of candidate PDCCHs configured by the terminal device in a time unit exceeds a limit, the terminal device monitors the PDCCH preferentially in the CSS, and monitors the PDCCH in ascending order of USS indexes (or referred to as identifiers, sequence numbers, and the like). It may also be understood that the PDCCH is monitored in descending order of USS priorities. That the terminal device monitors the PDCCH preferentially in the CSS may also be understood as that a candidate PDCCH is allocated to the CSS.

### 4. QCL relationship and TCI state information

In the NR system, the QCL relationship indicates that a plurality of antenna ports (or reference signals) have one or more same or similar channel features. The terminal may use a same or similar communication configuration for the plurality of reference signals that have the QCL relationship. Specifically, if two reference signals have the QCL relationship, a large-scale channel characteristic (or a channel feature) corresponding to an antenna port that sends one reference signal may be obtained by using inference from a large-scale channel characteristic corresponding to an antenna port that sends another reference signal. In other words, large-scale characteristics corresponding to reference signals that have a QCL relationship are the same, or a large-scale characteristic corresponding to one reference signal may be used to determine a large-scale characteristic corresponding to another reference signal that has the QCL relationship with the reference signal, or a difference between large-scale characteristics corresponding to two reference signals is less than a threshold.

The large-scale channel characteristic includes but is not limited to a delay spread (delay spread), a Doppler spread (Doppler spread), a Doppler shift (Doppler shift), an average delay (average delay), an average gain, a spatial receive parameter (spatial Rx parameters), and the like. The spatial receive parameter may include one or more of the following: an angle of arrival (angle of arrival, AOA), an average AOA, an AOA spread, an angle of departure (angle of departure, AOD), an average AOD, an AOD spread, a receive antenna spatial correlation parameter, a transmit antenna spatial correlation parameter, a transmit beam, a receive beam, and the like.

In the 5G NR protocol, the QCL relationship may be classified into the following four types based on different parameters:
type A (type A): the Doppler shift, the Doppler spread, the average delay, and the delay spread;
type B (type B): the Doppler shift and the Doppler spread;
type C (type C): the Doppler shift and the average delay; and
type D (type D): the spatial receive parameter.

Parameters in the type A, the type B, and the type C may be used for time-frequency synchronization and channel estimation. Specifically, the Doppler shift may be used for frequency domain synchronization, the average delay may be used for time domain synchronization, and the Doppler spread and the delay spread may be used for channel estimation.

The type D indicates that spatial receive parameters used by the terminal to receive the two reference signals may be the same or similar, and may be used by the terminal to determine the spatial receive parameters. Optionally, the spatial receive parameter may be understood as the receive beam. In addition, in the NR system, a connection is established between the network device and the terminal by using a beam training process. Therefore, the type D may be further indicates that spatial transmit parameters used by the network device to send two reference signals are the same or similar, and the space domain transmit parameter may be understood as a transmit beam.

The QCL relationship is usually configured by using TCI state information. One piece of TCI state information includes one downlink reference signal and a QCL type of the reference signal. Alternatively, one piece of TCI state information includes indication information of a first downlink reference signal and a QCL type corresponding to the reference signal, and a second downlink reference signal and a QCL type corresponding to the reference signal. The QCL type corresponding to the first downlink reference signal is the type A, the type B, or the type C. The QCL type corresponding to the second downlink reference signal is the type D.

For example, the TCI state information may indicate a source reference signal that has a quasi-colocation (quasi-colocation, QCL) relationship with a DMRS of the PDCCH. In other words, the TCI state may indicate a QCL relationship between the DMRS and the source reference signal.

In some implementations, the configuration information of the CORESET may include one or more pieces of TCI state information, and one piece of TCI state information may be activated by using a MAC control element (control element, CE) on a media access control (medium access control, MAC) layer.

After TCI state information of a CORESET is configured or activated, the terminal may perform, based on a channel feature of a source reference signal that is indicated by the TCI state information, channel estimation when monitoring the PDCCH in the CORESET, or determine a receive beam used when monitoring the PDCCH in the CORESET.

For example, when the type D QCL source reference signal indicated by the TCI state information is a CSI-RS in a beam training process, that is, when the DMRS of the PDCCH has a QCL type D relationship with the CSI-RS in the beam training process, the terminal may receive the PDCCH by using a receive beam for receiving the CSI-RS previously.

The foregoing describes technical terms and related concepts that may be used in embodiments of this application. Details are not described below again.

Currently, after an optimal BPL is obtained between the terminal and the network device through beam training, the optimal BPL may be used to receive and send the PDCCH in the CORESET configured for the terminal. However, communication quality of the optimal BPL may deteriorate. For example, when the terminal moves, a blockage may occur between the terminal and the network device, an environment of a surrounding scatterer may change, and communication quality of the optimal BPL previously obtained through beam training may deteriorate. In other words, the optimal BPL between the terminal and the network device may change, and beam switching needs to be performed. Therefore, the terminal may continuously report the CSI to the network device to notify the network device of a change state of an optimal transmit beam. When receiving the CSI, the network device reconfigures (that is, updates) the TCI state information in the CORESET of the terminal device, so that the terminal and the network device may receive and send the PDCCH by using a new BPL based on the updated TCI state information.

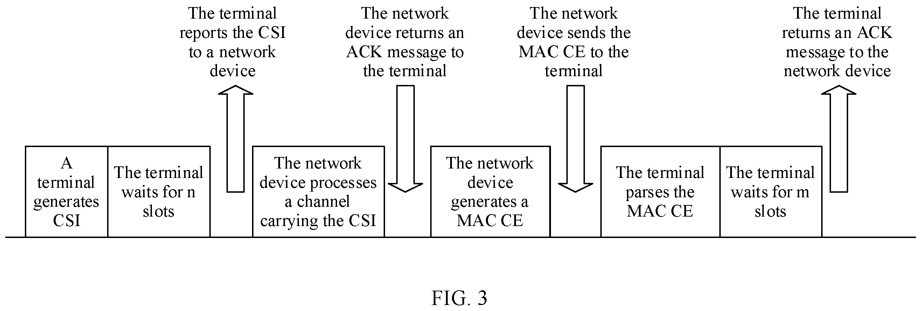

For example, as shown in FIG. 3, the conventional technology provides a procedure of updating the TCI state information in the CORESET.

The terminal generates the CSI. The terminal measures RSRP (or an SINR) of a CSI-RS delivered by the network device, and generates the CSI based on a measurement result. Then, the terminal waits for an uplink slot used for CSI reporting, for example, an uplink slot after n slots, which may be used for CSI reporting. n is a positive integer. Therefore, the terminal reports the CSI to the network device after the n slots. Then, the network device receives the reported CSI by processing a channel carrying the CSI, to determine, based on the CSI, whether the optimal transmit beam changes. In addition, the network device returns an ACK message to the terminal, where the ACK message indicates that the network device successfully receives the CSI.

If the network device determines, based on the CSI, that the TCI state information in the CORESET needs to be updated, that is, determines that a receive/transmit beam in the CORESET needs to be updated, the network device performs a process of updating the TCI state information. The process specifically includes: The network device generates a MAC CE, where the MAC CE is used to update a TCI state of the CORESET, and send the MAC CE to the terminal. A type D QCL source reference signal indicated in the TCI state is a reference signal with highest RSRP/SINR in the CSI reporting, or there is a direct type D QCL relationship between the type D QCL source reference signal indicated in the TCI state and a reference signal with the highest RSRP/SINR in the CSI reporting, or there is an indirect type D QCL relationship. This process may be understood as indicating to the terminal that the network device subsequently sends, by using the optimal transmit beam corresponding to the reported CSI, the PDCCH in an SS associated with the CORESET. Therefore, the terminal device may subsequently monitor, by using the receive beam corresponding to the optimal transmit beam in the reported CSI, the PDCCH in the SS associated with the CORESET.

Then, the terminal parses the received MAC CE, waits for an uplink slot, and then replies with an ACK message in the uplink slot. For example, after m slots, time for replying with the ACK message is after m slots, and m is a positive integer. In this case, the terminal device replies with the ACK message to the network device after the m slots, to notify the network device that the MAC CE has been successfully received. In this way, the TCI state information in the CORESET is updated, and the network device and the terminal may receive and send the PDCCH based on the updated TCI state information/BPL.

As described above, in the beam switching process, long signaling exchange time is required for a process in which the CORESET updates the TCI state information, so that an update delay of the TCI state information is long. In other words, a delay of updating the receive beam used by the terminal when the terminal monitors the PDCCH in the CORESET is excessively long. However, in the beam switching scenario, communication quality of the optimal BPL may deteriorate at a fast speed. For example, in time of dozens of milliseconds (ms) to time of less than 10 ms, communication quality of the optimal BPL may deteriorate to a case in which the optimal BPL cannot be used, that is, the optimal BPL is interrupted. Therefore, if the optimal BPL is interrupted in a signaling interaction process of updating the TCI state information of the CORESET, a configuration of a new BPL fails, and communication quality of another old (or referred to as "existing" or "present") BPL is also degraded to be unavailable. In other words, a link between the network device and the terminal device is interrupted. In this case, a beam failure recovery (beam failure recovery) process that takes a long time (up to hundreds of ms) needs to be initiated between the terminal and the network device.

Based on this, this application provides a communication method. According to the method, a delay of updating TCI state information in a CORESET can be reduced, that is, a delay of updating a source reference signal that has a QCL relationship with a demodulation reference signal of a PDCCH can be reduced, or a delay of updating a receive beam used by a terminal when a PDCCH is monitored in the CORESET can be reduced, and a probability of communication link interruption is reduced.

The technical solutions in embodiments of this application may be applied to various communication systems. For example, the communication systems include orthogonal frequency-division multiple access (orthogonal frequency-division multiple access, OFDMA), single carrier frequency division multiple access (single carrier FDMA, SC-FDMA), a satellite communication system, an NTN system, an Internet of Things (internet of things, IoT) system, an NR system, or a future evolved communication system. Terms "system" and "network" are interchangeable. In addition, the communication systems may be further applicable to a future-oriented communication technology, and the technical solutions provided in embodiments of this application are applicable to all such systems.

The foregoing communication systems to which this application is applicable are merely examples for description, and communication systems applicable to this application are not limited thereto. This is stated herein once for all, and is not repeated below.

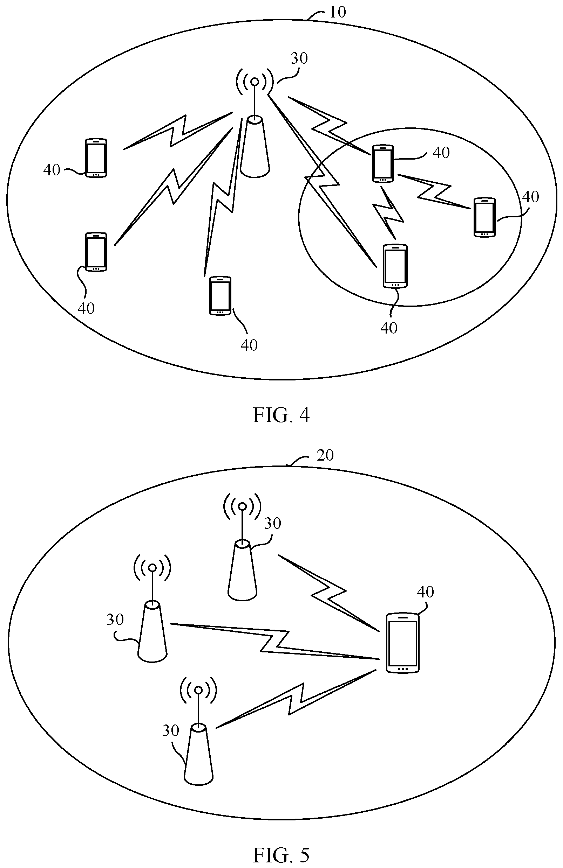

FIG. 4 shows a communication system 10 according to an embodiment of this application. The communication system 10 includes at least one network device 30 and one or more terminals 40 connected to the network device 30. Optionally, different terminals 40 may communicate with each other.

Alternatively, FIG. 5 shows another communication system 20 according to an embodiment of this application. The communication system 20 includes at least one terminal (also referred to as a terminal device) 40 and one or more network devices 30 connected to the terminal 40. Optionally, different network devices 30 may communicate with each other.

An example in which the network device 30 shown in FIG. 4 or FIG. 5 communicates with any terminal 40 is used. In this application, the terminal reports channel state information to the network device. Correspondingly, the network device receives the channel state information from the terminal. The channel state information includes an identifier of at least one reference signal, and RSRP and/or an SINR corresponding to each reference signal. When the reported channel state information meets a preset condition, it may be understood that, when the preset condition is met, it may be inferred that a change of an optimal BPL between the network device and the terminal causes switching of an optimal BPL/beam, and a first SS starts to take effect or is activated. In other words, the network device may send a PDCCH to the terminal in the first SS, and the terminal starts to monitor the PDCCH in the first SS. A demodulation reference signal of the PDCCH in the first SS and a first reference signal meet a type D QCL relationship. The first reference signal is a reference signal with highest RSRP or a reference signal with a highest SINR in the channel state information.

Based on this solution, when the channel state information meets the preset condition, the first SS is activated, and the terminal and the network device can directly send and receive the PDCCH in the first SS by using a new beam. In other words, the first SS is not activated by default in a normal case, that is, the network device does not send the PDCCH in the first SS, and the terminal does not monitor the PDCCH in the first SS. However, when the information state information reported by the terminal meets the preset condition, for example, indicates that an optimal beam changes or quality of a previous BPL is lower than a threshold, the terminal activates the first SS, and after receiving the channel state information, the network device also activates the first SS after determining that the state information meets the preset condition.

In addition, there is the type D QCL relationship between a demodulation reference signal of the PDCCH in the first SS and a first reference signal. To be specific, a type D source reference signal indicated in the TCI state information of the CORESET associated with the first SS is the first reference signal, or is a reference signal that has the type D QCL relationship with the first reference signal. It may also be understood that there is the type D QCL relationship between the demodulation reference signal of the PDCCH in the CORESET associated with the first SS and the first reference signal. In other words, the network device and the terminal can receive and send the PDCCH in the first SS based on a BPL corresponding to the first reference signal. The first reference signal is a reference signal with highest RSRP or a reference signal with a highest SINR in the channel state information. To be specific, a BPL corresponding to the first reference signal is the optimal BPL. Alternatively, equivalently, the optimal BPL in the channel state information is a transmit beam used by the network device to send the first reference signal and a receive beam used by the terminal to receive the first reference signal. Therefore, the terminal and the network device may receive and send the PDCCH in the first SS or a corresponding CORESET by using the optimal BPL.

In this way, when the terminal reports the channel state information to the network device and the channel state information meets the preset condition, the terminal directly activates a corresponding SS, and determines, based on the channel state information, TCI state information of a CORESET associated with the SS. The terminal device may use the receive beam corresponding to the optimal BPL in the channel state information or a beam close to the receive beam (which may be understood as a beam that has a same direction as the receive beam but may have a different beam width, which is uniformly described herein) to perform PDCCH monitoring in the SS. Similarly, when the network device receives the channel state information and the channel state information meets the preset condition, the network device also directly activates the corresponding SS, and determines, based on the channel state information, the TCI state information of the CORESET associated with the SS. When sending the PDCCH in the SS, the network device may use a transmit beam corresponding to the optimal BPL in the channel state information or a beam close to the transmit beam (which may be understood as a beam that has a same direction as the transmit beam but may have a different beam width).

In conclusion, when the channel state information reported by the terminal indicates that the optimal BPL between the terminal and the network device changes, a temporary first SS may be directly activated between the terminal and the network device. The terminal and the network device may send and receive a PDCCH on the temporary first SS based on the optimal BPL indicated in the channel state information, so that more fast and efficient beam switching can be implemented. To be specific, the terminal and the network device do not need to update the TCI state information of the CORESET by using complex signaling interaction, thereby reducing a long signaling interaction time in FIG. 3, and reducing a delay of updating the TCI state information, that is, reducing a delay of updating the receive beam used by the terminal to monitor the PDCCH in the CORESET, or a delay of updating a source reference signal that has the QCL relationship with a demodulation reference signal of the PDCCH (or DCI), and reducing a link interruption probability.

Optionally, the network device 30 in this embodiment of this application is a device for connecting the terminal 40 to a radio network. The network device 30 may be a node in a radio access network, or may be referred to as a base station, or may be referred to as a radio access network (radio access network, RAN) node (or device). For example, the network device may include an evolved nodeB (NodeB, eNB, or e-NodeB, evolutional NodeB) in a long term evolution (long term evolution, LTE) system or an evolved LTE (LTE-Advanced, LTE-A) system, for example, a conventional macro base station eNB and a micro base station eNB in a heterogeneous network scenario; or may include a next generation nodeB (next generation nodeB, gNB) in a 5G new radio (new radio, NR) system; or may further include a transmission reception point (transmission reception point, TRP), a home evolved NodeB (for example, home evolved NodeB, or home NodeB, HNB), a baseband unit (baseband unit, BBU), a baseband pool BBU pool, or a Wi-Fi access point (access point, AP); or may further include a centralized unit (centralized unit, CU) and a distributed unit (distributed unit, DU) in a cloud access network (cloud radio access network, CloudRAN) system; or may include a base station in a non-terrestrial network (non-terrestrial network, NTN), that is, may be deployed on a high-altitude platform or a satellite, where in the NTN, a network device may be used as a layer 1 (L1) relay (relay), or may be used as a base station, or may be used as a DU, or may be used as an integrated access and backhaul (integrated access and backhaul, IAB) node. Alternatively, the network device may be a device that implements a base station function in the IoT, for example, a device that implements a base station function in vehicle-to-everything (vehicle-to-everything, V2X), device to device (device to device, D2D), or machine to machine (machine to machine, M2M). This is not limited in embodiments of this application.

Optionally, the base station in embodiments of this application may include various forms of base stations, for example, a macro base station, a micro base station (also referred to as a small cell), a relay station, an access point, a next-generation NodeB (gNodeB, gNB), a home base station (for example, a home evolved NodeB or a home NodeB, HNB), a baseband unit (baseband unit, BBU), a transmitting and receiving point (transmitting and receiving point, TRP), a transmitting point (transmitting point, TP), and a mobile switching center. This is not specifically limited in embodiments of this application.

Optionally, the terminal 40 in embodiments of this application may be a device configured to implement a wireless communication function, for example, a terminal or a chip that may be used in a terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in the 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, an in-vehicle device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal having a communication function in the IoT, for example, a terminal in V2X (for example, an Internet of Vehicles device), a terminal in D2D communication, or a terminal in M2M communication. The terminal may be mobile or fixed.

Optionally, the network device 30 and the terminal 40 in embodiments of this application may also be referred to as communication apparatuses, and may be a general-purpose device or a dedicated device. This is not specifically limited in embodiments of this application.

It should be noted that the communication method provided in embodiments of this application may be applicable to the network device and the terminal shown in FIG. 4 and FIG. 5. For specific implementation, refer to the following method embodiments. Details are not described herein again.

It should be noted that the solutions in embodiments of this application may also be used in another communication system, and a corresponding name may also be replaced with a name of a corresponding function in the another communication system.

It should be understood that FIG. 4 and FIG. 5 are merely simplified diagrams of examples for ease of understanding. The communication system may further include another device, which is not shown in FIG. 4 and FIG. 5.

With reference to the accompanying drawings, the following describes communication provided in embodiments of this application in detail by using an example in which the network device 30 shown in FIG. 4 or FIG. 5 interacts with any terminal 40.

It should be noted that names of messages, names of parameters in messages, or the like in the following embodiments of this application are merely examples, and may also have other names during specific implementation. This is not specifically limited in embodiments of this application.

It may be understood that, in embodiments of this application, the terminal and/or the network device may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

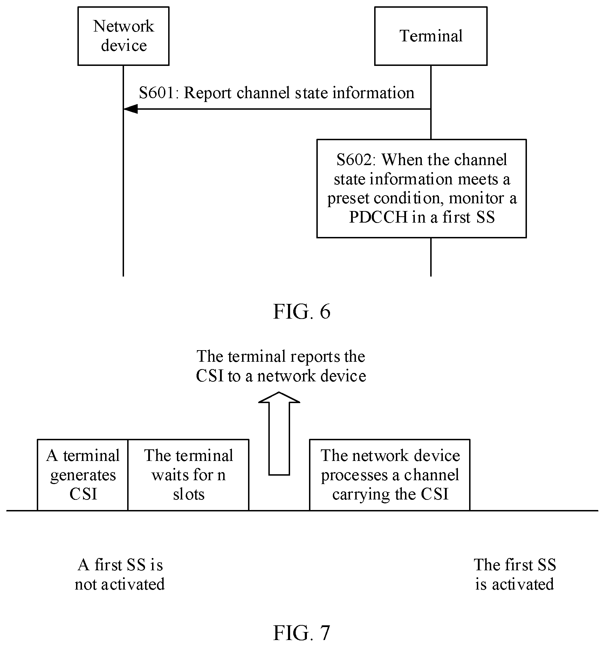

FIG. 6 shows a communication method according to an embodiment of this application. The method includes the following steps.

S601: A terminal reports channel state information to a network device. Correspondingly, the network device receives the channel state information from the terminal.

The channel state information includes an identifier of at least one reference signal, and RSRP corresponding to each of the at least one reference signal and/or an SINR corresponding to each reference signal.

For example, the reference signal may be referred to as a CSI-RS. Optionally, the network device may configure, for the terminal, a plurality of CSI-RSs used for beam measurement, including configuring information such as an index, a time-frequency location, and a quantity of ports of the CSI-RSs, and send the CSI-RSs to the terminal at corresponding time-frequency locations by using a transmit beam. For each CSI-RS used for beam measurement, transmit beams (or referred to as spatial transmit parameters) used by the network device may be the same or may be different. It should be noted that an occasion for delivering the CSI-RS by the network device is not limited in this application, and the CSI-RS may be delivered periodically or may be delivered aperiodically. This is not limited in this application. Optionally, whether the CSI-RS is periodically delivered, or a period used when the CSI-RS is periodically delivered may be configured by the network device in configuration information of the CSI-RS.

The terminal may receive the CSI-RS from the network device by using a receive beam. Similarly, receive beams (or referred to as spatial receive parameters) used by the terminal may be the same or may be different. Then, the terminal may generate the channel state information based on a measurement result of each CSI-RS, and then report the channel state information to the network device. Optionally, the terminal may periodically report the channel state information, semi-statically report the channel state information, or aperiodically report the channel state information. A manner and an occasion of reporting the channel state information by the terminal to the network device are not limited in this application. Optionally, a specific manner and an occasion of reporting the channel state information may be configured by the network device.

It may be understood that, for each reference signal, the terminal may measure both the RSRP and the SINR, or may measure one of the RSRP and the SINR. When the terminal measures both the RSRP and the SINR, the channel state information reported by the terminal may also include only one of the RSRP and the SINR. Specific reporting may be further configured by the network device.

S602: When the channel state information meets a preset condition, the terminal starts to monitor a PDCCH in a first search space SS. Correspondingly, when the network device receives the channel state information and the channel state information meets the preset condition, the network device determines that the terminal starts to monitor the PDCCH in the first SS.

A demodulation reference signal of the PDCCH in the first SS and a first reference signal meet a type D quasi-colocation QCL relationship, and the first reference signal is a reference signal with highest RSRP or a reference signal with a highest SINR in the channel state information.

It may be understood that when the channel state information meets the preset condition, the network device may send the PDCCH to the terminal in the first SS by using a first space domain transmit parameter, and the terminal may monitor the PDCCH or a PDCCH candidate set in the first SS by using a first space domain receive parameter. The first space domain transmit parameter is determined based on a space domain transmit parameter of the first reference signal, and the first space domain receive parameter is determined based on a space domain receive parameter of the first reference signal.

In other words, when the channel state information meets the preset condition, the network device may send the PDCCH to the terminal in the first SS by using the first transmit beam, and the terminal may monitor the PDCCH in the first SS by using the first receive beam. The first transmit beam is a transmit beam corresponding to an optimal BPL indicated by the channel state information or a beam close to the transmit beam, and the first receive beam is a receive beam corresponding to the optimal BPL indicated by the channel state information or a beam close to the receive beam.

In other words, the first SS is not activated by default in a normal case, that is, the network device does not send the PDCCH in the first SS, and the terminal device does not monitor the PDCCH in the first SS. However, when the information state information reported by the terminal device meets the preset condition, for example, indicates that an optimal beam changes or quality of a previous BPL is lower than a threshold, the terminal device activates the first SS, and after receiving the channel state information, the network device also activates the first SS after determining that the state information meets the preset condition.

It may be understood that when the first SS is associated with a first CORESET, activating the first SS may also be understood as activating the first CORESET. That the terminal starts to monitor the PDCCH in the first SS may also be understood as that the terminal starts to monitor the PDCCH in the first CORESET. That the demodulation reference signal of the PDCCH in the first SS and the first reference signal meet the type D quasi-colocation QCL relationship may also be understood as that the demodulation reference signal of the PDCCH in the first CORESET and the first reference signal meet the type D quasi-colocation QCL relationship.

Optionally, when the channel state information meets the preset condition, and after the terminal receives an ACK message for the channel state information from the network device, the terminal starts to monitor the PDCCH in the first SS. Equivalently, when the channel state information meets the preset condition, and after the network device replies with the ACK message for the channel state information, the network device determines that the terminal starts to monitor the PDCCH in the first SS. Based on this implementation, the terminal starts to monitor the PDCCH in the first SS, that is, activates the first SS, only after determining that the network device receives the channel state information that meets the preset condition. It can be ensured that both the terminal and the network device use the first SS to receive and send the PDCCH, that is, use a TCI state corresponding to the first SS. This can avoid a problem that a TCI configuration does not match between the terminal and the network device because the terminal reports the channel state information but the network device does not receive the channel state information and the terminal uses the TCI state corresponding to the first SS but the network device does not use the TCI state of the first SS.

It may be understood that, in a case in which the channel state information includes only the RSRP corresponding to each reference signal, the first reference signal is a reference signal with the highest RSRP in the channel state information. When the channel state information includes only the SINR corresponding to each reference signal, the first reference signal is a reference signal with the highest SINR in the channel state information. When the channel state information includes both the RSRP and the SINR that are corresponding to each reference signal, the first reference signal may be the reference signal with the highest RSRP in the channel state information, or may be the reference signal with the highest SINR in the channel state information, or may be the reference signal with the highest RSRP and the highest SINR in the channel state information. Optionally, a specific method for determining the first reference signal may be configured by a network or preconfigured.

Optionally, the preset condition includes: The first reference signal and a second reference signal are different; or the first reference signal and a second reference signal do not meet the type D QCL relationship. The second reference signal is a source reference signal indicated by TCI state information included in configuration information of one of the at least one second-type CORESET.

Herein, the second-type CORESET may be understood as a CORESET (different from a CORESET associated with a standby first SS) that is currently used to receive and send the PDCCH between the terminal device and the network device. On an SS associated with the second-type CORESET, the terminal device needs to continuously monitor the PDCCH. For further details, refer to the following detailed descriptions. Details are not described herein. When the preset condition is met, it may be determined, based on the channel state information, that quality of an existing BPL used to receive and send the PDCCH is lower than quality of a BPL corresponding to the first reference signal. Therefore, the PDCCH needs to be received and sent over a new BPL.

In this embodiment of this application, the type D QCL relationship may be a direct type D QCL relationship, or may be an indirect type D QCL relationship. For example, if the direct type D QCL relationship exists between a signal A and a signal B, and the direct type D QCL relationship exists between a signal B and a signal C, the indirect type D QCL relationship exists between the signal A and the signal C.

Optionally, the second reference signal may be a source reference signal indicated by TCI state information included in configuration information of the one of the at least one second-type CORESET. Specifically, the second reference signal may be a source reference signal indicated by TCI state information included in configuration information of any second-type CORESET in the at least one second-type CORESET, or may be a source reference signal indicated by TCI state information included in configuration information of a second-type CORESET with a smallest identifier (or referred to as a sequence number) in the at least one second-type CORESET, or may be a source reference signal indicated by TCI state information included in the configuration information of the second-type CORESET with another identifier other than the smallest identifier in the at least one second-type CORESET. The identifier herein may be understood as an identifier included in the configuration information of the CORESET. The source reference signal indicated by the TCI state information herein may be understood as a type D QCL source reference signal in the TCI state information.

Optionally, the channel state information includes an identifier of a third reference signal and RSRP and/or an SINR corresponding to the third reference signal, and the preset condition may further include: An RSRP value or an SINR value of the third reference signal is less than a preset threshold, and the third reference signal is the same as the second reference signal; or an RSRP value or an SINR value of the third reference signal is less than a preset threshold, and the third reference signal and the second reference signal meet the type D QCL relationship. For a description of the second reference signal herein, refer to the foregoing description. Details are not described herein again. When the preset condition is met, it may be determined, based on the channel state information, that quality of an existing BPL used to receive and send the PDCCH is lower than the preset threshold. Therefore, the PDCCH needs to be received and sent over the new BPL.

Optionally, the preset condition may further include: A difference between the RSRP of the first reference signal and the RSRP of the second reference signal (or the third reference signal) is greater than a first preset threshold; or a difference between the SINR of the first reference signal and the SINR of the second reference signal (or the third reference signal) is greater than a second preset threshold. To be specific, activation of the first SS is triggered only when the BPL quality corresponding to the first reference signal is greater than quality of an existing BPL to a specific extent, and a new BPL is used in the first SS to receive and send the PDCCH, thereby avoiding frequent activation of the first SS and frequent switching of the BPL caused by a short-term fluctuation of the BPL quality.

For example, FIG. 7 is a diagram of activating a first SS. As shown in FIG. 7, a terminal generates CSI. For example, the terminal measures RSRP and/or an SINR of a CSI-RS delivered by a network device, and generates the CSI based on a measurement result. Then, the terminal waits for CSI reporting time, for example, CSI reporting time after n slots, where n is a positive integer, and reports the CSI to the network device. The first SS is not activated in a time period of the foregoing process, that is, the first SS is in an inactive state. Because the CSI meets a preset condition, the terminal device determines that the first SS is activated, starts to monitor a PDCCH in the first SS, and a receive beam used to monitor the PDCCH is a receive beam corresponding to an optimal BPL in the CSI or a beam that is similar to the receive beam. Then, the network device receives the CSI and determines that the CSI meets the preset condition. Therefore, the network device activates the first SS after this step. To be specific, the network device may send the PDCCH to the terminal by using the first SS. A transmit beam used for sending the PDCCH in the first SS may be a transmit beam corresponding to the optimal BPL in the CSI or a beam close to the transmit beam.

Optionally, in this embodiment of this application, "monitoring a PDCCH" may also be described as "blindly detecting a PDCCH".

Based on the foregoing technical solution, when the channel state information meets the preset condition, the first SS is activated, and the terminal and the network device can directly send and receive the PDCCH in the first SS by using a new beam. In other words, the first SS is not activated by default in a normal case, that is, the network device does not send the PDCCH in the first SS, and the terminal does not monitor the PDCCH in the first SS. However, when the information state information reported by the terminal meets the preset condition, for example, indicates that an optimal beam changes or quality of a previous BPL is lower than a threshold, the terminal activates the first SS, and after receiving the channel state information, the network device also activates the first SS after determining that the state information meets the preset condition.

In addition, there is the type D QCL relationship between a demodulation reference signal of the PDCCH in the first SS and a first reference signal. To be specific, a type D source reference signal indicated in the TCI state information of the CORESET associated with the first SS is the first reference signal, or is a reference signal that has the type D QCL relationship with the first reference signal. In other words, the network device and the terminal can receive and send the PDCCH in the first SS based on a BPL corresponding to the first reference signal. The first reference signal is a reference signal with highest RSRP or a reference signal with a highest SINR in the channel state information. To be specific, a BPL corresponding to the first reference signal is the optimal BPL. Alternatively, equivalently, the optimal BPL in the channel state information is a transmit beam used by the network device to send the first reference signal and a receive beam used by the terminal device to receive the first reference signal. Therefore, the terminal and the network device may receive and send the PDCCH in the first SS by using the optimal BPL.

In this way, when the terminal reports the channel state information to the network device and the channel state information meets the preset condition, the terminal directly activates a corresponding SS, and determines, based on the channel state information, TCI state information of a CORESET associated with the SS. The terminal device may use the receive beam corresponding to the optimal BPL in the channel state information or a beam close to the receive beam to perform PDCCH monitoring in the SS. Similarly, when the network device receives the channel state information and the channel state information meets the preset condition, the network device also directly activates the corresponding SS, and determines, based on the channel state information, the TCI state of the CORESET associated with the SS. When sending the PDCCH in the SS, the network device may use a transmit beam corresponding to the optimal BPL in the channel state information or a beam close to the transmit beam.

In conclusion, when the channel state information reported by the terminal indicates that the optimal BPL between the terminal and the network device changes, temporary first SS may be directly activated between the terminal and the network device. The terminal and the network device may send and receive a PDCCH on the temporary first SS based on the optimal BPL indicated in the channel state information, so that more fast and efficient beam switching can be implemented. To be specific, the terminal and the network device do not need to update the TCI state information of the CORESET by using complex signaling interaction, thereby reducing a long signaling interaction time in FIG. 3, and reducing a delay of updating the TCI state information, that is, reducing a delay of updating the receive beam used by the terminal to monitor the PDCCH in the CORESET, or a delay of updating a source reference signal that has the QCL relationship with a demodulation reference signal of the PDCCH (or DCI), and reducing a link interruption probability.

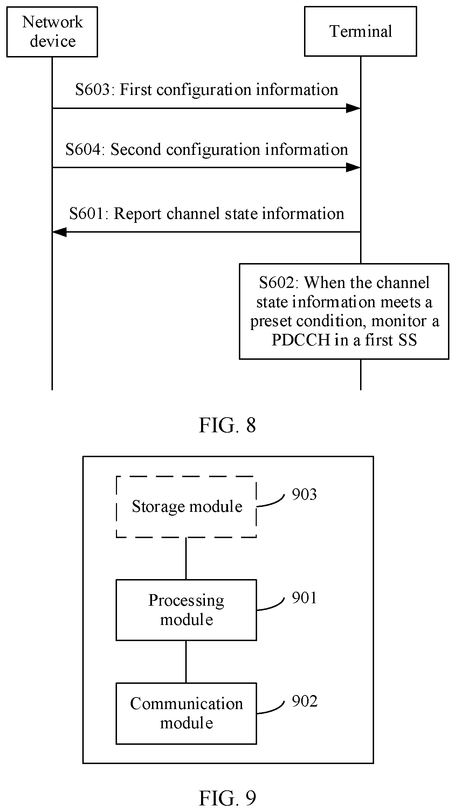

To help the terminal learn of a specific case of the SS and the CORESET that are configured by the network device for the terminal, optionally, before step S601, as shown in FIG. 8, the method shown in FIG. 6 further includes the following steps.

S603: The network device sends first configuration information to the terminal. Correspondingly, the terminal receives the first configuration information from the network device.

The first configuration information includes configuration information of the first CORESET and configuration information of the first SS, and the configuration information of the first CORESET and the configuration information of the first SS include time-frequency location information of a candidate PDCCH (or time-frequency location information of a PDCCH that may be sent by the network device to the terminal). That is, the terminal may determine, based on the first CORESET and the configuration information of the first SS, a time-frequency location at which a PDCCH needs to be monitored after the first SS is activated.

In a possible implementation, the configuration information of the first CORESET may not include initial TCI state information by default. In this implementation, when the network device and the terminal subsequently activate the first SS and the first CORESET, the network device and the terminal may automatically configure the TCI state information in the configuration information of the first CORESET. The source reference signal indicated by the TCI state information is the first reference signal.

It should be noted that the configuration information of the first CORESET and the configuration information of the first SS may be included in one piece of configuration information, or may be separately included in two pieces of configuration information. The configuration information of the first CORESET and the configuration information of the first SS may be simultaneously delivered by the network device to the terminal, or may be sequentially delivered by the network device to the terminal.

That the first SS is associated with the first CORESET may also be described as that the configuration information of the first CORESET may be applied to the first SS. In other words, the first CORESET is a CORESET applicable to the first SS. Optionally, in embodiments of this application, there may be one or more first SSs.

The first CORESET is a first-type CORESET. An SS associated with the first-type CORESET (in other words, the first-type CORESET is a CORESET applicable to the SS) is an SS that does not perform PDCCH monitoring by the terminal by default (or an SS that the network device does not send a PDCCH to the terminal by default). That is, the terminal does not perform PDCCH monitoring at time-frequency locations of these SSs by default. Optionally, there may be one or more SSs associated with the first-type CORESET. It may also be understood that the first-type CORESET is a CORESET that is not used by the terminal to monitor the PDCCH by default. It may also be understood that, after the terminal device receives the first configuration information, the terminal may not monitor the PDCCH at a corresponding time-frequency location.

S604: The network device sends second configuration information to the terminal. Correspondingly, the terminal receives the second configuration information from the network device.

The second configuration information includes configuration information of at least one second-type CORESET and configuration information of at least one second SS. The configuration information of the second-type CORESET and the configuration information of the second SS include time-frequency location information about that the terminal monitors the PDCCH (or referred to as a candidate PDCCH) (or time-frequency location information about that the network device may send a PDCCH to the terminal). In other words, the terminal may determine, based on the configuration information of the second-type CORESET and the configuration information of the second SS, a time-frequency location at which the PDCCH needs to be monitored. It may also be understood that, after the terminal device receives the second configuration information, the terminal needs to monitor the PDCCH at a corresponding time-frequency location.

The at least one second SS is associated with at least one second-type CORESET. It should be understood that one second-type CORESET may be associated with one or more second SSs. In other words, the second-type CORESET is a CORESET applicable to the second SS.

Similarly, the configuration information of the second-type CORESET and the configuration information of the second SS may be included in one piece of configuration information, or may be separately included in different pieces of configuration information. Optionally, configuration information of different second-type CORESETs may be included in one piece of configuration information, or may be included in one or more pieces of different configuration information. When a plurality of pieces of configuration information are used, the plurality of pieces of configuration information may be simultaneously delivered by the network device to the terminal, or may be sequentially delivered by the network device to the terminal.

It should be noted that in embodiments of this application, a specific configuration manner, a delivery manner, and the like of configuration information of the first-type CORESET, the second-type CORESET, the SS associated with the first-type CORESET, the SS associated with the second-type CORESET, and the like are not limited in this application.

The terminal needs to perform PDCCH monitoring on an SS associated with the second-type CORESET. In other words, the SS associated with the second-type CORESET (in other words, the second-type CORESET is a CORESET applicable to the SS) is an SS (or an SS that is used by default) for which the terminal needs to monitor a PDCCH (or an SS for which the network device may send the PDCCH to the terminal). The configuration information of each second-type CORESET includes TCI configuration information, the TCI state information indicates a source reference signal, and the source reference signal and a demodulation reference signal of a PDCCH in the second-type CORESET (or a second SS associated with the second CORESET) meet the type D QCL relationship.

It should be noted that the first configuration information and the second configuration information may be simultaneously delivered by the network device to the terminal, or may be sequentially delivered by the network device to the terminal. This is not limited in this application.

Further, the terminal may monitor the PDCCH in the second SS (or the second-type CORESET) based on the received first configuration information and second configuration information before the first SS is activated. After the first SS is activated, in addition to monitoring the PDCCH in the first SS (or the first CORESET), the terminal may continue to monitor the PDCCH in the second SS (or the second-type CORESET).

It may be understood that, because an SS configured by the network device for the terminal in one slot or one span (span) may exceed a monitoring capability of the terminal, the terminal may monitor the PDCCH based on a priority of the SS. The SS may be classified into a USS and a CSS, and a priority of the CSS is higher than a priority of the USS. Generally, when the terminal monitors the PDCCH in the CSS, the monitoring capability of the terminal is not exceeded. When the terminal monitors the PDCCH in the USS, the following possible implementations are specifically included.

In a possible implementation, the first SS is a first USS, and the at least one second SS includes at least one second USS. The method shown in FIG. 6 further includes step S605 (not shown in the figure).

S605: When the terminal needs to monitor the PDCCH in the first USS and some or all of the at least one second USS in a target time unit, the terminal may monitor the PDCCH preferentially in the first USS based on the monitoring capability of the terminal.

The target time unit may be one or more slots, one or more time domain symbols, or one or more spans. This is not specifically limited in this application, and is uniformly described herein.

Optionally, the terminal may determine, based on the configuration information of the SS, specific SSs located in the target time unit, and the terminal may monitor PDCCHs in the SSs in the target time unit. This is uniformly described herein.

Optionally, the at least one second SS may further include one or more second CSSs.

For example, in the target time unit, when the terminal needs to monitor the PDCCH in the first USS and the two second USSs, the terminal monitors the PDCCH preferentially in the first USS. In other words, a priority of the first USS is a USS with a highest priority in all to-be-monitored USSs. It may be understood that a BPL corresponding to the first USS is an optimal BPL indicated in the channel state information. Therefore, monitoring the PDCCH preferentially in the first USS is more efficient.

It may be understood that, that the terminal preferentially performs PDCCH monitoring on the USS may be understood as that the terminal allocates a candidate PDCCH to the USS.

In another possible implementation, the first SS is a first USS, and the at least one second SS includes at least one second USS. The method shown in FIG. 6 further includes step S606 (not shown in the figure).

S606: When the terminal needs to monitor the PDCCH in the first USS and some or all of the at least one second USS in a target time unit, the terminal may monitor the PDCCH in a corresponding USS based on a monitoring capability of the terminal and a priority of the USS.

A priority of the first USS is lower than a priority of a third USS and is higher than a priority of a fourth USS. The third USS is a second USS with a highest priority in the at least one second USS, and the fourth USS is a second USS with a second highest priority (or referred to as a second highest priority) in the at least one second USS. That is, the first USS is the USS with the second highest priority among all USSs.

Alternatively, a priority of the first USS is lower than a priority of a third USS and is higher than a priority of a fourth USS, the third USS is a second USS with a highest priority in the target time unit, and the fourth USS is a second USS with a second highest priority in the target time unit. In other words, the first USS is the USS with the second highest priority in USSs that need to be monitored by the terminal in the target time unit.

It may be understood that, that the terminal preferentially performs PDCCH monitoring on the USS may be understood as that the terminal allocates a candidate PDCCH to the USS.

Optionally, the priority of the USS may be determined by using an identifier of the USS. A determining rule may be that a smaller identifier of the USS indicates a higher priority of the USS, or a larger identifier of the USS indicates a higher priority of the USS. According to the foregoing method, the terminal preferentially ensures that the PDCCH is monitored on an original BPL (corresponding to the second USS with the highest priority). When the network device does not receive the channel state information, the terminal activates the first SS, but the network device does not activate the first SS. In this case, the network device and the terminal cannot receive and send the PDCCH over a new BPL. However, this method ensures that an old BPL is unblocked, and some basic communication can be performed when quality of the old BPL does not drop to a bottom, ensuring that a communication link is not interrupted.

It may be understood that the SS includes one or more candidate PDCCHs. Optionally, when a quantity of candidate PDCCHs in the USS that need to be monitored by the terminal in the target time unit exceeds a monitoring capability of the terminal, the terminal may cancel monitoring of a candidate PDCCH in a USS with a lower priority. For example, the terminal may sequentially cancel monitoring of candidate PDCCHs in n (n is a positive integer) low-priority USSs in ascending order of priorities, so that after it is ensured that the terminal can monitor the PDCCH in the first USS, a quantity of candidate PDCCHs in remaining USSs that need to be monitored does not exceed a monitoring capability of the terminal.

Optionally, the terminal may further stop monitoring the PDCCH in the first SS. The operation specifically includes the following two possible implementations.

In a possible implementation, the method shown in FIG. 6 further includes step S607 (not shown in the figure).

S607: After a first moment, the terminal stops monitoring the PDCCH in the first SS. Correspondingly, after the first moment, the network device determines that the terminal stops monitoring the PDCCH in the first SS.

The first moment is a moment before which target duration elapses after the second moment. The second moment is a moment at which the terminal reports the channel state information to the network device. Correspondingly, the second moment is a moment at which the network device receives the channel state information from the terminal. Alternatively,
the second moment is a moment at which the terminal receives an acknowledgment message from the network device. Correspondingly, the second moment is a moment at which the network device sends the acknowledgment message to the terminal. The acknowledgment message indicates that the network device successfully receives the channel state information. Alternatively,
the second moment is a moment at which the first SS takes effect (or is activated) for the first time. Alternatively,
the second moment is a moment at which the terminal detects the PDCCH in the first SS for the first time. Correspondingly, the second moment is a moment at which the network device sends the PDCCH to the terminal for the first time in the first SS.

Optionally, the target duration may be configured by the network device or preconfigured by the network device.

It should be noted that in embodiments of this application, that the network device determines that the terminal stops detecting the PDCCH in the first SS may also be understood as that the network device does not (or cannot) send the PDCCH to the terminal in the first SS.

In another possible implementation, the method shown in FIG. 6 may further include the following steps (not shown in the figure).

S608a: After receiving the TCI state information included in the configuration information that is of the target CORESET and that is reconfigured by the network device, the terminal stops monitoring the PDCCH in the first SS. Correspondingly, after sending the TCI state information included in the configuration information of the reconfigured target CORESET to the terminal, the network device determines that the terminal stops monitoring the PDCCH in the first SS.

The target CORESET belongs to the at least one second-type CORESET. The target CORESET may be one or more second-type CORESETs.

Optionally, a specific implementation in which the network device reconfigures, for the terminal, the TCI state information included in the configuration information of the target CORESET may be the manner shown in FIG. 3, or may be another manner. This is not specifically limited in this application.

Alternatively, S608b: After receiving the target indication information from the network device, the terminal stops monitoring the PDCCH in the first SS. Correspondingly, after the network device sends the target indication information to the terminal, the network device determines that the terminal stops monitoring the PDCCH in the first SS.

The target indication information indicates the terminal to stop monitoring the PDCCH in the first SS.

Optionally, in some embodiments, after the first CORESET and the first SS are activated (or described as effective) by using the method shown in FIG. 6, the first CORESET and the first SS may be further configured as the second-type CORESET and the second SS.

In a possible implementation, the first CORESET and the first SS are automatically configured as a new second-type CORESET and a new second SS after preset time after the first CORESET and the first SS are activated.

In another possible implementation, the first CORESET and the first SS automatically replace the previously configured second-type CORESET and the second SS after preset time after the first CORESET and the first SS are activated, to become the second-type CORESET and the second SS.

In another possible implementation, after one complete data scheduling is completed between the terminal and the network device by using the activated first CORESET and the first SS, the first CORESET and the first SS automatically replace the previously configured second-type CORESET and the second SS, to become the second-type CORESET and the second SS, or are automatically configured as the new second-type CORESET and the second SS.

Specifically, the second-type CORESET and the second SS that are specifically replaced by the first CORESET and the first SS may be configured in the second configuration information, or may be separately configured. This is not limited in this application.

The foregoing mainly describes the solutions provided in embodiments of this application from the perspective of the methods. It may be understood that, to implement the foregoing functions, the communication apparatus (for example, the network device or the terminal device) includes a corresponding hardware structure and/or software module for performing each function. With reference to the units and algorithm steps described in embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, functional modules of the communication apparatus may be obtained through division based on the foregoing method examples. For example, each functional module may be obtained through division in correspondence to each function, or two or more functions may be integrated into one processing unit. The integrated unit may be implemented in a form of hardware, or may be implemented in a form of a software functional module. It should be noted that, in embodiments of this application, division into the units is an example, and is merely a logical function division. In actual implementation, another division manner may be used.

FIG. 9 shows a communication apparatus according to an embodiment of this application. The communication apparatus includes a processing module 901 and a communication module 902.

In a possible example, the communication apparatus is a network device. The processing module 901 is configured to support the network device in determining, when channel state information meets a preset condition, that the terminal starts to monitor a PDCCH in a first SS, and/or another processing operation that needs to be performed by the network device in embodiments of this application. The communication module 902 is configured to support the network device in performing step S601 in FIG. 6, steps S601, S603, and S604 in FIG. 8, and/or another communication operation that needs to be performed by the network device in embodiments of this application.

In another possible example, the communication apparatus is a terminal device. The processing module 901 is configured to support the terminal device in performing step S602 in FIG. 6, and/or another processing operation that needs to be performed by the terminal device in embodiments of this application. The communication module 902 is configured to support the terminal device in performing step S601 in FIG. 6, steps S601, S603, and S604 in FIG. 8, and/or another communication operation that needs to be performed by the terminal device in embodiments of this application.

Optionally, the communication apparatus may further include a storage module 903, configured to store program code and data of the communication apparatus. The data may include but is not limited to original data, intermediate data, or the like.

The processing module 901 may be a processor or a controller, for example, may be a CPU, a general purpose processor, an application-specific integrated circuit (application specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communication module 902 may be a communication interface, a transceiver, a transceiver circuit, or the like. The communication interface is a general term. During specific implementation, the communication interface may include a plurality of interfaces, for example, may include an interface between a base station and a terminal and/or another interface. The storage module 903 may be a memory.

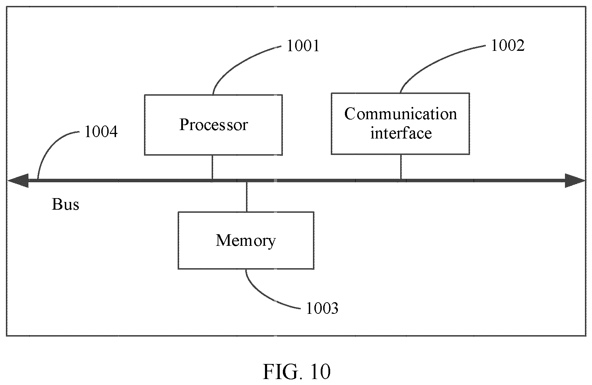

When the processing module 901 is a processor, the communication module 902 is a communication interface, and the storage module 903 is a memory, the communication apparatus in this embodiment of this application may be shown in FIG. 10.

Refer to FIG. 10. The communication apparatus includes a processor 1001, a communication interface 1002, and a memory 1003. Optionally, the communication apparatus may further include a bus 1004. The communication interface 1002, the processor 1001, and the memory 1003 may be connected to each other through the bus 1004. The bus 1004 may be a peripheral component interconnect standard (peripheral component interconnect, PCI) bus, an extended industry standard architecture (extended industry standard architecture, EISA) bus, or the like. The bus 1004 may be classified into an address bus, a data bus, a control bus, and the like. For ease of representation, only one thick line is for representing the bus in FIG. 10, but this does not mean that there is only one bus or only one type of bus.

Optionally, an embodiment of this application further provides a computer program product carrying computer instructions. When the computer instructions are run on a computer, the computer is enabled to perform the method described in the foregoing embodiment.

Optionally, an embodiment of this application further provides a computer-readable storage medium. The computer-readable storage medium stores computer instructions. When the computer instructions are run on a computer, the computer is enabled to perform the method described in the foregoing embodiment.

Optionally, an embodiment of this application further provides a chip, including a processing circuit and a transceiver pin. The processing circuit and the transceiver pin are configured to implement the method described in the foregoing embodiments. The processing circuit is configured to perform a processing action in a corresponding method, and the transceiver pin is configured to perform a receiving/transmitting action in the corresponding method.

Optionally, embodiments of this application further provide a communication system, including the network device provided in the foregoing embodiments and the terminal provided in the foregoing embodiments.

A person of ordinary skill in the art may understand that: All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state disk (Solid State Disk, SSD)), or the like.

In the several embodiments provided in this application, it should be understood that the disclosed system, apparatus, and method may be implemented in other manners. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate parts may or may not be physically separate, and parts displayed as units may or may not be physical units, that is, may be located in one place, or may be distributed on a plurality of devices. Some or all of the units may be selected based on actual requirements to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions of this application essentially or the part making contribution may be implemented in a form of a software product. The computer software product is stored in a readable storage medium, such as a floppy disk, a hard disk, or an optical disc of a computer, and includes several instructions for instructing a computer device (which may be a personal computer, a server, or a network device) to perform the methods described in embodiments of this application.

## Claims

1. A communication method, performed by a communications apparatus, wherein the method comprises:
reporting channel state information, wherein the channel state information comprises an identifier of at least one reference signal and reference signal received power, RSRP, corresponding to each of the at least one reference signal and/or a signal to interference plus noise ratio, SINR, corresponding to each reference signal; and
when the channel state information meets a preset condition, starting to monitor a physical downlink control channel, PDCCH, in a first search space, SS, wherein a demodulation reference signal of the PDCCH in the first SS and a first reference signal meet a type D quasi-colocation, QCL, relationship, and the first reference signal is a reference signal with highest RSRP or a reference signal with a highest SINR in the channel state information.

2. The method according to claim 1, wherein before reporting the channel state information, the method further comprises:
receiving first configuration information, wherein the first configuration information comprises configuration information of a first control resource set, CORESET, and configuration information of the first SS, the configuration information of the first CORESET and the configuration information of the first SS comprise time-frequency location information of a candidate PDCCH, and the first SS is associated with the first CORESET; and
the first CORESET is a first-type CORESET, and an SS associated with the first-type CORESET is an SS in which a terminal does not monitor the PDCCH by default.

3. The method according to claim 1 or 2, wherein before reporting the channel state information, the method further comprises:
receiving second configuration information, wherein the second configuration information comprises configuration information of at least one second-type CORESET and configuration information of at least one second SS, the at least one second SS is associated with the at least one second-type CORESET, and a terminal needs to monitor the PDCCH in an SS associated with the second-type CORESET; and
configuration information of each second-type CORESET comprises transmission configuration indicator TCI state information, the TCI state information indicates a source reference signal, and the source reference signal and a demodulation reference signal of the PDCCH in the second-type CORESET meet the type D QCL relationship.

4. The method according to claim 3, wherein the preset condition comprises:
the first reference signal and a second reference signal are different; or the first reference signal and a second reference signal do not meet the type D QCL relationship, wherein
the second reference signal is a source reference signal indicated by TCI state information comprised in configuration information of one of the at least one second-type CORESET.

5. The method according to claim 3 or 4, wherein the channel state information comprises an identifier of a third reference signal and RSRP and/or an SINR corresponding to the third reference signal; and
the preset condition comprises: an RSRP value or an SINR value of the third reference signal is less than a preset threshold, and the third reference signal is the same as the second reference signal; or
an RSRP value or an SINR value of the third reference signal is less than a preset threshold, and the third reference signal and the second reference signal meet the type D QCL relationship, wherein
the second reference signal is the source reference signal indicated by the TCI state information comprised in the configuration information of the one of the at least one second-type CORESET.

6. The method according to any one of claims 1 to 5, wherein the first SS is a first user-specific search space USS, the at least one second SS comprises at least one second USS, and the method further comprises:
when the PDCCH needs to be monitored in the first USS and some or all of the at least one second USS in a target time unit, monitoring the PDCCH preferentially in the first USS based on a monitoring capability of a terminal.

7. The method according to any one of claims 1 to 6, wherein after monitoring the PDCCH in the first SS, the method further comprises:
stopping monitoring the PDCCH in the first SS after a first moment, wherein
the first moment is a moment before which target duration elapses after a second moment, and the second moment is:
a moment at which the channel state information is sent to a network device;
a moment at which an acknowledgment message is received from the network device, wherein the acknowledgment message indicates that the network device successfully receives the channel state information;
a moment at which the first SS takes effect for the first time; or
a moment at which the PDCCH is monitored in the first SS for the first time.

8. The method according to any one of claims 3 to 6, wherein after monitoring the PDCCH in the first SS, the method further comprises:
after receiving TCI state information that is comprised in configuration information of a target CORESET reconfigured by a network device, stopping monitoring the PDCCH in the first SS, wherein the target CORESET belongs to the at least one second-type CORESET;
or
after receiving target indication information from the network device, stopping monitoring the PDCCH in the first SS, wherein the target indication information indicates a terminal to stop monitoring the PDCCH in the first SS.

9. A communication method, performed by a communications apparatus, wherein the method comprises:
receiving channel state information, wherein the channel state information comprises an identifier of at least one reference signal and RSRP corresponding to each of the at least one reference signal and/or an SINR corresponding to each reference signal; and
when the channel state information meets a preset condition, determining that a terminal starts to monitor a PDCCH in a first SS, wherein a demodulation reference signal of the PDCCH in the first SS and a first reference signal meet a type D QCL relationship, and the first reference signal is a reference signal with highest RSRP or a reference signal with a highest SINR in the channel state information.

10. The method according to claim 9, wherein before receiving the channel state information, the method further comprises:
sending first configuration information to the terminal, wherein the first configuration information comprises configuration information of a first CORESET and configuration information of the first SS, the configuration information of the first CORESET and the configuration information of the first SS comprise time-frequency location information of a candidate PDCCH, and the first SS is associated with the first CORESET; and
the first CORESET is a first-type CORESET, and an SS associated with the first-type CORESET is an SS in which the terminal does not monitor the PDCCH by default.

11. The method according to claim 9 or 10, wherein before receiving the channel state information from the terminal, the method further comprises:
sending second configuration information to the terminal, wherein the second configuration information comprises configuration information of at least one second-type CORESET and configuration information of at least one second SS, the at least one second SS is associated with the at least one second-type CORESET, and the terminal needs to monitor the PDCCH in an SS associated with the second-type CORESET; and
configuration information of each second-type CORESET comprises transmission configuration indicator TCI state information, the TCI state information indicates a source reference signal, and the source reference signal and a demodulation reference signal of the PDCCH in the second-type CORESET meet the type D QCL relationship.

12. The method according to claim 11, wherein the preset condition comprises:
the first reference signal and a second reference signal are different; or the first reference signal and a second reference signal do not meet the type D QCL relationship, wherein
the second reference signal is a source reference signal indicated by TCI state information comprised in configuration information of one of the at least one second-type CORESET.

13. The method according to claim 11 or 12, wherein the channel state information comprises an identifier of a third reference signal and RSRP and/or an SINR corresponding to the third reference signal; and
the preset condition comprises: an RSRP value or an SINR value of the third reference signal is less than a preset threshold, and the third reference signal is the same as the second reference signal; or
an RSRP value or an SINR value of the third reference signal is less than a preset threshold, and the third reference signal and the second reference signal meet the type D QCL relationship, wherein
the second reference signal is the source reference signal indicated by the TCI state information comprised in the configuration information of the one of the at least one second-type CORESET.

14. A communication apparatus, which is configured to perform the method according to any one of claims 1 to 8, or is configured to perform the method according to any one of claims 9 to 13.

15. A computer-readable storage medium, comprising a computer program or instructions, wherein when the computer program or the instructions is/are run on a communication apparatus, the communication apparatus is enabled to perform the method according to any one of claims 1 to 8, or the communication apparatus is enabled to perform the method according to any one of claims 9 to 13.

## Patentansprüche

1. Kommunikationsverfahren, durchgeführt von einer Kommunikationsvorrichtung, wobei das Verfahren Folgendes umfasst:
Melden von Kanalzustandsinformationen, wobei die Kanalzustandsinformationen eine Kennung von mindestens einem Referenzsignal und eine Referenzsignalempfangsleistung, RSRP, die jedem des mindestens einen Referenzsignals entspricht, und/oder ein Verhältnis von Signal zu Interferenz plus Rauschen, SINR, das jedem Referenzsignal entspricht, umfassen; und
wenn die Kanalzustandsinformationen eine voreingestellte Bedingung erfüllen, Starten eines Überwachens eines physikalischen "Downlink"-Steuerkanals, PDCCH, in einem ersten Suchraum, SS, wobei ein Demodulationsreferenzsignal des PDCCH in dem ersten SS und ein erstes Referenzsignal eine "Quasi-Colocation"-Beziehung, QCL, des Typs D erfüllen und das erste Referenzsignal ein Referenzsignal mit der höchsten RSRP oder ein Referenzsignal mit einem höchsten SINR in den Kanalzustandsinformationen ist.

2. Verfahren nach Anspruch 1, wobei das Verfahren vor dem Melden der Kanalzustandsinformationen ferner Folgendes umfasst:
Empfangen erster Konfigurationsinformationen, wobei die ersten Konfigurationsinformationen Konfigurationsinformationen eines ersten Steuerressourcensatzes, CORESET, und Konfigurationsinformationen des ersten SS umfassen, wobei die Konfigurationsinformationen des ersten CORESET und die Konfigurationsinformationen des ersten SS Zeit-Frequenz-Positionsinformationen eines Kandidaten-PDCCH umfassen und der SS mit dem ersten CORESET assoziiert ist, und
wobei der erste CORESET ein CORESET ersten Typs ist und ein SS, der mit dem CORESET ersten Typs assoziiert ist, ein SS ist, in dem ein Endgerät den PDCCH nicht standardmäßig überwacht.

3. Verfahren nach Anspruch 1 oder 2, wobei das Verfahren vor dem Melden der Kanalzustandsinformationen ferner Folgendes umfasst:
Empfangen zweiter Konfigurationsinformationen, wobei die zweiten Konfigurationsinformationen Konfigurationsinformationen von mindestens einem CORESET zweiten Typs und Konfigurationsinformationen von mindestens einem zweiten SS umfassen, wobei der mindestens eine zweite SS mit dem mindestens einen CORESET zweiten Typs assoziiert ist und ein Endgerät den PDCCH in einem SS, der mit dem CORESET zweiten Typs assoziiert ist, überwachen muss; und
wobei Konfigurationsinformationen jedes CORESET zweiten Typs Zustandsinformationen eines Übertragungskonfigurationsindikators, TCI, umfassen, wobei die TCI-Zustandsinformationen ein Quellenreferenzsignal angeben und das Quellenreferenzsignal und ein Demodulationsreferenzsignal des PDCCH in dem CORESET zweiten Typs die QCL-Beziehung des Typs D erfüllen.

4. Verfahren nach Anspruch 3, wobei die voreingestellte Bedingung Folgendes umfasst:
das erste Referenzsignal und ein zweites Referenzsignal sind verschieden; oder das erste Referenzsignal und ein zweites Referenzsignal erfüllen nicht die QCL-Beziehung des Typs D, wobei
das zweite Referenzsignal ein Quellenreferenzsignal ist, das durch TCI-Zustandsinformationen angegeben wird, die in Konfigurationsinformationen von einem des mindestens einen CORESET zweiten Typs enthalten sind.

5. Verfahren nach Anspruch 3 oder 4, wobei die Kanalzustandsinformationen eine Kennung eines dritten Referenzsignals und die RSRP und/oder ein SINR entsprechend dem dritten Referenzsignal umfassen; und
die voreingestellte Bedingung Folgendes umfasst: ein RSRP-Wert oder ein SINR-Wert des dritten Referenzsignals ist kleiner als ein voreingestellter Grenzwert und das dritte Referenzsignal ist gleich dem zweiten Referenzsignal; oder
ein RSRP-Wert oder ein SINR-Wert des dritten Referenzsignals ist kleiner als ein voreingestellter Grenzwert und das dritte Referenzsignal und das zweite Referenzsignal erfüllen die QCL-Beziehung des Typs D, wobei
das zweite Referenzsignal das Quellenreferenzsignal ist, das durch die TCI-Zustandsinformationen angegeben wird, die in den Konfigurationsinformationen des einen des mindestens einen CORESET zweiten Typs enthalten sind.

6. Verfahren nach einem der Ansprüche 1 bis 5, wobei der erste SS ein erster benutzerspezifischer Suchraum, USS, ist, wobei der mindestens eine zweite SS mindestens einen zweiten USS umfasst und das Verfahren ferner Folgendes umfasst:
wenn der PDCCH in dem ersten USS und einigen oder allen des mindestens einen zweiten USS in einer Zielzeiteinheit überwacht werden müssen, Überwachen des PDCCH vorzugsweise in dem ersten USS basierend auf einer Überwachungsfähigkeit eines Endgeräts.

7. Verfahren nach einem der Ansprüche 1 bis 6, wobei das Verfahren nach dem Überwachen des PDCCH in dem ersten SS ferner Folgendes umfasst:
Stoppen des Überwachens des PDCCH in dem ersten SS nach einem ersten Moment, wobei:
der erste Moment ein Moment ist, vor dem eine Zielzeitspanne nach einem zweiten Moment verstreicht, und der zweite Moment Folgendes ist:
ein Moment, zu dem die Kanalzustandsinformationen an ein Netzwerkgerät gesendet werden;
ein Moment, zu dem eine Bestätigungsnachricht von dem Netzwerkgerät empfangen wird, wobei die Bestätigungsnachricht angibt, dass das Netzwerkgerät die Kanalzustandsinformationen erfolgreich empfängt;
ein Moment, zu dem der erste SS das erste Mal wirksam wird; oder
ein Moment, zu dem der PDCCH in dem ersten SS das erste Mal überwacht wird.

8. Verfahren nach einem der Ansprüche 3 bis 6, wobei das Verfahren nach dem Überwachen des PDCCH in dem ersten SS ferner Folgendes umfasst:
nach dem Empfangen der TCI-Zustandsinformationen, die in Konfigurationsinformationen eines Ziel-CORESET enthalten sind, der durch ein Netzwerkgerät neu konfiguriert wurde, Stoppen des Überwachens des PDCCH in dem ersten SS, wobei der Ziel-CORESET zu dem mindestens einen CORESET zweiten Typs gehört;
oder
nach dem Empfangen von Zielangabeinformationen von dem Netzwerkgerät, Stoppen des Überwachens des PDCCH in dem ersten SS, wobei die Zielangabeinformationen, einem Endgerät anzeigen, das Überwachen des PDCCH in dem ersten SS zu stoppen.

9. Kommunikationsverfahren, durchgeführt von einer Kommunikationsvorrichtung, wobei das Verfahren Folgendes umfasst:
Empfangen von Kanalzustandsinformationen, wobei die Kanalzustandsinformationen eine Kennung von mindestens einem Referenzsignal und RSRP, die jedem des mindestens einen Referenzsignals entspricht, und/oder ein SINR, das jedem Referenzsignal entspricht, umfassen; und
wenn die Kanalzustandsinformationen eine voreingestellte Bedingung erfüllen, Bestimmen, dass ein Endgerät ein Überwachen eines PDCCH in einem ersten SS startet, wobei ein Demodulationsreferenzsignal des PDCCH in dem ersten SS und ein erstes Referenzsignal eine QCL-Beziehung des Typs D erfüllen und das erste Referenzsignal ein Referenzsignal mit der höchsten RSRP oder ein Referenzsignal mit einem höchsten SINR in den Kanalzustandsinformationen ist.

10. Verfahren nach Anspruch 9, wobei das Verfahren vor dem Empfangen der Kanalzustandsinformationen ferner Folgendes umfasst:
Senden erster Konfigurationsinformationen an das Endgerät, wobei die ersten Konfigurationsinformationen Konfigurationsinformationen eines ersten CORESET und Konfigurationsinformationen des ersten SS umfassen, wobei die Konfigurationsinformationen des ersten CORESET und die Konfigurationsinformationen des ersten SS Zeit-Frequenz-Positionsinformationen eines Kandidaten-PDCCH umfassen und der erste SS mit dem ersten CORESET assoziiert ist, und
wobei der erste CORESET ein CORESET ersten Typs ist und ein SS, der mit dem CORESET ersten Typs assoziiert ist, ein SS ist, in dem das Endgerät den PDCCH nicht standardmäßig überwacht.

11. Verfahren nach Anspruch 9 oder 10, wobei das Verfahren vor dem Empfangen der Kanalzustandsinformationen von dem Endgerät ferner Folgendes umfasst:
Senden zweiter Konfigurationsinformationen an das Endgerät, wobei die zweiten Konfigurationsinformationen Konfigurationsinformationen von mindestens einem CORESET zweiten Typs und Konfigurationsinformationen von mindestens einem zweiten SS umfassen, wobei der mindestens eine zweite SS mit dem mindestens einen CORESET zweiten Typs assoziiert ist und das Endgerät den PDCCH in einem SS, der mit dem CORESET zweiten Typs assoziiert ist, überwachen muss; und
wobei Konfigurationsinformationen jedes CORESET zweiten Typs Zustandsinformationen eines Übertragungskonfigurationsindikators, TCI, umfassen, wobei die TCI-Zustandsinformationen ein Quellenreferenzsignal angeben und das Quellenreferenzsignal und ein Demodulationsreferenzsignal des PDCCH in dem CORESET zweiten Typs die QCL-Beziehung des Typs D erfüllen.

12. Verfahren nach Anspruch 11, wobei die voreingestellte Bedingung Folgendes umfasst:
das erste Referenzsignal und ein zweites Referenzsignal sind verschieden; oder das erste Referenzsignal und ein zweites Referenzsignal erfüllen nicht die QCL-Beziehung des Typs D, wobei
das zweite Referenzsignal ein Quellenreferenzsignal ist, das durch TCI-Zustandsinformationen angegeben wird, die in Konfigurationsinformationen von einem des mindestens einen CORESET zweiten Typs enthalten sind.

13. Verfahren nach Anspruch 11 oder 12, wobei die Kanalzustandsinformationen eine Kennung eines dritten Referenzsignals und eine RSRP und/oder ein SINR entsprechend dem dritten Referenzsignal umfassen; und
die voreingestellte Bedingung Folgendes umfasst: ein RSRP-Wert oder ein SINR-Wert des dritten Referenzsignals ist kleiner als ein voreingestellter Schwellwert und das dritte Referenzsignal ist gleich dem zweiten Referenzsignal; oder
ein RSRP-Wert oder ein SINR-Wert des dritten Referenzsignals ist kleiner als ein voreingestellter Schwellwert und das dritte Referenzsignal und das zweite Referenzsignal erfüllen die QCL-Beziehung des Typs D, wobei
das zweite Referenzsignal das Quellenreferenzsignal ist, das durch die TCI-Zustandsinformationen angegeben wird, die in den Konfigurationsinformationen des einen des mindestens einen CORESET zweiten Typs enthalten sind.

14. Kommunikationsvorrichtung, die dafür konfiguriert ist, das Verfahren nach einem der Ansprüche 1 bis 8 durchzuführen, oder dafür konfiguriert ist, das Verfahren nach einem der Ansprüche 9 bis 13 durchzuführen.

15. Computerlesbares Speichermedium, ein Computerprogramm oder Anweisungen umfassend, wobei eine Kommunikationsvorrichtung, wenn das Computerprogramm oder die Anweisungen in der Kommunikationsvorrichtung abgearbeitet werden, in die Lage versetzt wird, das Verfahren nach einem der Ansprüche 1 bis 8 durchzuführen, oder die Kommunikationsvorrichtung in die Lage versetzt wird, das Verfahren nach einem der Ansprüche 9 bis 13 durchzuführen.

## Revendications

1. Procédé de communication, réalisé par un appareil de communication, le procédé comprenant :
le rapport d'informations d'état de canal, les informations d'état de canal comprenant un identifiant d'au moins un signal de référence et une puissance reçue de signal de référence, RSRP, correspondant à chaque signal de l'au moins un signal de référence et/ou un rapport signal sur interférence plus bruit, SINR, correspondant à chaque signal de référence ; et
lorsque les informations d'état de canal satisfont une condition prédéfinie, le début de la surveillance d'un canal physique de contrôle descendant, PDCCH, dans un premier espace de recherche, SS, un signal de référence de démodulation du PDCCH dans le premier SS et un premier signal de référence satisfaisant une relation de quasi-colocalisation, QCL, de type D, et le premier signal de référence étant un signal de référence ayant la RSRP la plus élevée ou un signal de référence ayant le SINR le plus élevé dans les informations d'état de canal.

2. Procédé selon la revendication 1, avant le rapport des informations d'état de canal, le procédé comprenant en outre :
la réception de premières informations de configuration, les premières informations de configuration comprenant des informations de configuration d'un premier ensemble de ressources de contrôle, CORESET, et des informations de configuration du premier SS, les informations de configuration du premier CORESET et les informations de configuration du premier SS comprenant des informations d'emplacement temps-fréquence d'un PDCCH candidat, et le premier SS étant associé au premier CORESET ; et
le premier CORESET étant un CORESET de premier type, et un SS associé au CORESET de premier type étant un SS dans lequel un terminal ne surveille pas le PDCCH par défaut.

3. Procédé selon la revendication 1 ou 2, avant le rapport des informations d'état de canal, le procédé comprenant en outre :
la réception de deuxièmes informations de configuration, les deuxièmes informations de configuration comprenant des informations de configuration d'au moins un CORESET de deuxième type et des informations de configuration d'au moins un deuxième SS, l'au moins un deuxième SS étant associé à l'au moins un CORESET de deuxième type, et un terminal devant surveiller le PDCCH dans un SS associé au CORESET de deuxième type ; et
des informations de configuration de chaque CORESET de deuxième type comprenant des informations d'état d'indicateur de configuration de transmission, TCI, les informations d'état TCI indiquant un signal de référence source, et le signal de référence source et un signal de référence de démodulation du PDCCH dans le CORESET de deuxième type satisfaisant la relation QCL de type D.

4. Procédé selon la revendication 3, la condition prédéfinie étant la suivante :
le premier signal de référence et un deuxième signal de référence sont différents ; ou
le premier signal de référence et un deuxième signal de référence ne satisfont pas la relation QCL de type D,
le deuxième signal de référence étant un signal de référence source indiqué par des informations d'état TCI comprises dans des informations de configuration d'un CORESET parmi l'au moins un CORESET de deuxième type.

5. Procédé selon la revendication 3 ou 4, les informations d'état de canal comprenant un identifiant d'un troisième signal de référence et une RSRP et/ou un SINR correspondant au troisième signal de référence ; et
la condition prédéfinie étant la suivante : une valeur de RSRP ou une valeur de SINR du troisième signal de référence est inférieure à un seuil prédéfini, et le troisième signal de référence est identique au deuxième signal de référence ; ou
une valeur de RSRP ou une valeur de SINR du troisième signal de référence est inférieure à un seuil prédéfini, et le troisième signal de référence et le deuxième signal de référence satisfont la relation QCL de type D,
le deuxième signal de référence étant le signal de référence source indiqué par les informations d'état TCI comprises dans les informations de configuration d'un CORESET parmi l'au moins un CORESET de deuxième type.

6. Procédé selon l'une quelconque des revendications 1 à 5, le premier SS étant un premier espace de recherche spécifique à un utilisateur, USS, l'au moins un deuxième SS comprenant au moins un deuxième USS, et le procédé comprenant en outre :
lorsque le PDCCH doit être surveillé dans le premier USS et dans une partie ou la totalité de l'au moins un deuxième USS au cours d'une unité de temps cible, la surveillance du PDCCH de préférence dans le premier USS sur la base d'une capacité de surveillance d'un terminal.

7. Procédé selon l'une quelconque des revendications 1 à 6, après la surveillance du PDCCH dans le premier SS, le procédé comprenant en outre :
l'arrêt de la surveillance du PDCCH dans le premier SS après un premier instant,
le premier instant étant un instant avant lequel une durée cible s'écoule après un deuxième instant, et le deuxième instant étant :
un instant auquel les informations d'état de canal sont envoyées à un dispositif de réseau ;
un instant auquel un message d'accusé de réception est reçu en provenance du dispositif de réseau, le message d'accusé de réception indiquant que le dispositif de réseau reçoit avec succès les informations d'état de canal ;
un instant auquel le premier SS prend effet pour la première fois ; ou
un instant auquel le PDCCH est surveillé dans le premier SS pour la première fois.

8. Procédé selon l'une quelconque des revendications 3 à 6, après la surveillance du PDCCH dans le premier SS, le procédé comprenant en outre :
après la réception d'informations d'état TCI qui sont comprises dans des informations de configuration d'un CORESET cible reconfiguré par un dispositif de réseau, l'arrêt de la surveillance du PDCCH dans le premier SS,
le CORESET cible appartenant à l'au moins un CORESET de deuxième type ;
ou
après la réception d'informations d'indication cibles en provenance du dispositif de réseau, l'arrêt de la surveillance du PDCCH dans le premier SS, les informations d'indication cibles indiquant à un terminal d'arrêter la surveillance du PDCCH dans le premier SS.

9. Procédé de communication réalisé par un appareil de communication, le procédé comprenant :
la réception d'informations d'état de canal, les informations d'état de canal comprenant un identifiant d'au moins un signal de référence et une RSRP correspondant à chaque signal de l'au moins un signal de référence et/ou un SINR correspondant à chaque signal de référence ; et
lorsque les informations d'état de canal satisfont une condition prédéfinie, la détermination qu'un terminal commence à surveiller un PDCCH dans un premier SS, un signal de référence de démodulation du PDCCH dans le premier SS et un premier signal de référence satisfaisant une relation QCL de type D, et le premier signal de référence étant un signal de référence ayant la RSRP la plus élevée ou un signal de référence ayant le SINR le plus élevé dans les informations d'état de canal.

10. Procédé selon la revendication 9, avant la réception des informations d'état de canal, le procédé comprenant en outre :
l'envoi de premières informations de configuration au terminal, les premières informations de configuration comprenant des informations de configuration d'un premier CORESET et des informations de configuration du premier SS, les informations de configuration du premier CORESET et les informations de configuration du premier SS comprenant des informations d'emplacement temps-fréquence d'un PDCCH candidat, et le premier SS étant associé au premier CORESET ; et
le premier CORESET étant un CORESET de premier type, et un SS associé au CORESET de premier type étant un SS dans lequel le terminal ne surveille pas le PDCCH par défaut.

11. Procédé selon la revendication 9 ou 10, avant la réception des informations d'état de canal en provenance du terminal, le procédé comprenant en outre :
l'envoi de deuxièmes informations de configuration au terminal, les deuxièmes informations de configuration comprenant des informations de configuration d'au moins un CORESET de deuxième type et des informations de configuration d'au moins un deuxième SS, l'au moins un deuxième SS étant associé à l'au moins un CORESET de deuxième type, et le terminal devant surveiller le PDCCH dans un SS associé au CORESET de deuxième type ; et
des informations de configuration de chaque CORESET de deuxième type comprenant des informations d'état d'indicateur de configuration de transmission, TCI, les informations d'état TCI indiquant un signal de référence source, et le signal de référence source et un signal de référence de démodulation du PDCCH dans le CORESET de deuxième type satisfaisant la relation QCL de type D.

12. Procédé selon la revendication 11, la condition prédéfinie étant la suivante :
le premier signal de référence et un deuxième signal de référence sont différents ; ou
le premier signal de référence et un deuxième signal de référence ne satisfont pas la relation QCL de type D,
le deuxième signal de référence étant un signal de référence source indiqué par des informations d'état TCI comprises dans des informations de configuration d'un CORESET parmi l'au moins un CORESET de deuxième type.

13. Procédé selon la revendication 11 ou 12, les informations d'état de canal comprenant un identifiant d'un troisième signal de référence et une RSRP et/ou un SINR correspondant au troisième signal de référence ; et
la condition prédéfinie étant la suivante : une valeur de RSRP ou une valeur de SINR du troisième signal de référence est inférieure à un seuil prédéfini, et le troisième signal de référence est identique au deuxième signal de référence ; ou
une valeur de RSRP ou une valeur de SINR du troisième signal de référence est inférieure à un seuil prédéfini, et le troisième signal de référence et le deuxième signal de référence satisfont la relation QCL de type D,
le deuxième signal de référence étant le signal de référence source indiqué par les informations d'état TCI comprises dans les informations de configuration d'un CORESET parmi l'au moins un CORESET de deuxième type.

14. Appareil de communication, qui est configuré pour réaliser le procédé selon l'une quelconque des revendications 1 à 8, ou est configuré pour réaliser le procédé selon l'une quelconque des revendications 9 à 13.

15. Support de stockage lisible par ordinateur, comprenant un programme informatique ou des instructions qui, lorsqu'ils sont exécutés sur un appareil de communication, permettent à l'appareil de communication de réaliser le procédé selon l'une quelconque des revendications 1 à 8, ou permettent à l'appareil de communication de réaliser le procédé selon l'une quelconque des revendications 9 à 13.
